(19) Europäisches Patentamt
European Patent Office
Office européen des brevets

(11) EP 1 817 886 B1

(12) EUROPEAN PATENT SPECIFICATION

(45) Date of publication and mention
of the grant of the patent:
29.10.2008 Bulletin 2008/44

(51) Int Cl.:
H04L 27/18 (2006.01)    H04L 27/34 (2006.01)
H04L 1/00 (2006.01)

(21) Application number: 05715610.1

(22) Date of filing: 28.02.2005

(86) International application number:
PCT/EP2005/002109

(87) International publication number:
WO 2006/089569 (31.08.2006 Gazette 2006/35)

(54) **METHOD AND APPARATUS FOR TRANSMITTING AND RECEIVING BIT INTERLEAVED CODED MODULATION SIGNALS**

VERFAHREN UND VORRICHTUNG ZUM SENDEN UND EMPFANGEN VON BITVERSCHACHTELTEN, KODIERTEN MODULATIONSSIGNALEN

MÉTHODE ET APPAREIL D'ÉMISSION ET DE RÉCEPTION D'UN SIGNAL DE MODULATION CODÉ PAR ENTRELACEMENTS DE BIT

(84) Designated Contracting States:
DE GB

(43) Date of publication of application:
15.08.2007 Bulletin 2007/33

(73) Proprietor: NTT DoCoMo, Inc.
Tokyo 100-6150 (JP)

(72) Inventors:
• BAUCH, Gerhard
80799 Munich (DE)
• SETHURAMAN, Prasanna
80637 Munich (DE)

(74) Representative: Zinkler, Franz et al
Schoppe, Zimmermann, Stöckeler & Zinkler
Patentanwälte
Postfach 246
82043 Pullach bei München (DE)

(56) References cited:
• CLEVORN T ET AL: "ITERATIVE DECODING OF BICM WITH NON-REGULAR SIGNAL CONSTELLATION SETS" ITG FACHBERICHTE, VDE VERLAG, BERLIN, DE, no. 181, 2003, pages 259-266, XP001203424 ISSN: 0932-6022 cited in the application
• SCHRECKENBACH F ET AL: "Optimized symbol mappings for bit-interleaved coded modulation with iterative decoding" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 3316-3320, XP010678408 ISBN: 0-7803-7974-8 cited in the application
• BAHL L R ET AL: "OPTIMAL DECODING OF LINEAR CODES FOR MINIMIZING SYMBOL ERROR RATE" IEEE TRANSACTIONS ON INFORMATION THEORY, IEEE INC. NEW YORK, US, vol. IT-20, no. 2, 1 March 1974 (1974-03-01), pages 284-287, XP000647243 ISSN: 0018-9448 cited in the application
• TEN BRINK S ET AL: "Iterative demapping for QPSK modulation" ELECTRONICS LETTERS, IEE STEVENAGE, GB, vol. 34, no. 15, 23 July 1998 (1998-07-23), pages 1459-1460, XP006010100 ISSN: 0013-5194 cited in the application

## Description

The present invention relates to a transmitter, a receiver, a method for generating a transmit signal and a method for generating an information signal which can be used in the digital transmission technology.

Future wireless systems are expected to support high data rate transmission with high spectral efficiency. Target values are in the range of 4-10 bit/s/Hz. In order to obtain those high spectral efficiencies along with high power efficiency, powerful coding techniques, which perform close to the theoretical limits are necessary. At the same time, the coding and modulation scheme needs to be highly adaptive in order to adjust it to the instantaneous channel state and the required quality of service. Application of the turbo principle has been shown to be the most promising approach in achieving these goals.

A particularly interesting scheme is the concatenation of an error correcting code, e.g. a convolutional code, a bit-interleaver and the mapper of a QAM/PSK modulation scheme. At the receiver, iterations can be performed between the demapper and the decoder. The goal is to design the mapping of code bits to transmit symbols such that the iterative detector converges at low SNR and shows a low error floor at high SNR. At the same time, it is wished to minimize the number of required iterations.

Iterative demapping and decoding has been proposed e.g. in "S. ten Brink, J. Speidel, and R.-H. Yan. Iterative demapping for qpsk modulation. Electronic Letters, pages 1459-1460, July 1998"; "A. Chindapol and A. Ritcey. Design, analysis and performance evaluation for BICM-ID with square QAM constellations in Rayleigh fading channels. IEEE Journal on Selected Areas in Communications, 19(5):944 - 957, May 2001"; "F. Schreckenbach, N. Goertz, J. Hagenauer, and G. Bauch. Optimized symbol mappings for bit-interleaved coded modulation with iterative decoding. In IEEE Globecom, December 2003"; in "F. Schreckenbach, N."Goertz, J. Hagenauer, and G. Bauch. Optimized symbol mappings for bit-interleaved coded modulation with iterative decoding. IEEE Communications Letters, 7(12):593-595, December 2003", and in "F. Schreckenbach and G. Bauch. EXIT charts for the design of iteratively decoded multilevel modulation. In European Signal Processing Conference (EUSIPCO), September 2004".

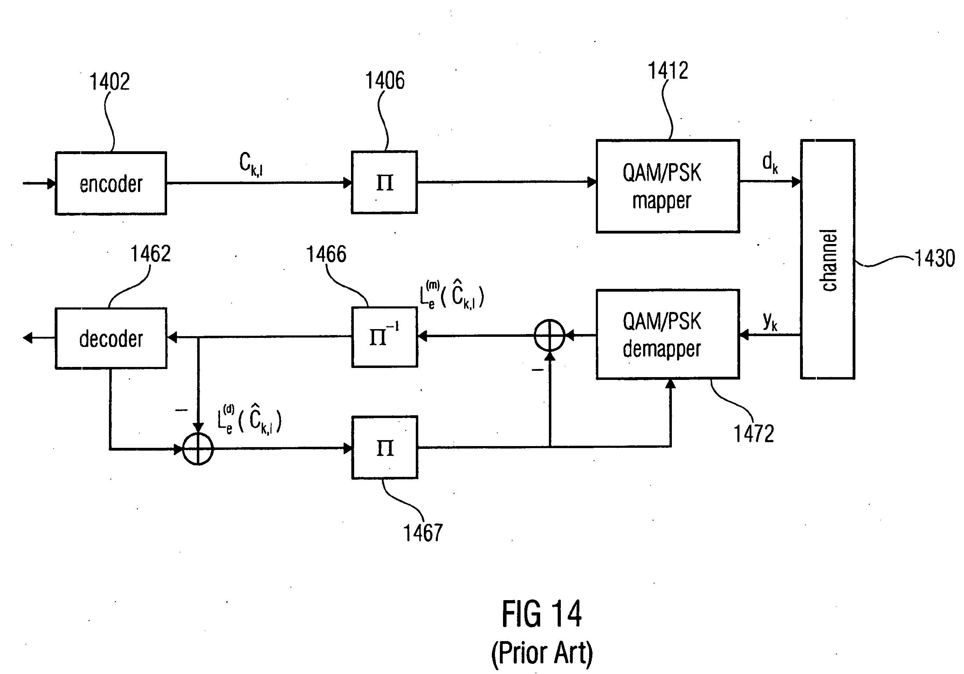

The main idea is depicted in Figure 14. At the transmitter, the data is encoded by the encoder 1402 of an error control code. The code bits $c_{k,l}$ are interleaved and mapped to complex constellation points $d_k$ of a QAM/PSK modulation scheme. At the receiver, the demapper 1472 produces soft extrinsic values $L_e^{(m)}(\hat{c}_{k,l})$ about the code bits based on the received values $y_k$ which are passed to the decoder 1462. The decoder 1462 computes improved extrinsic information $L_e^{(d)}(\hat{c}_{k,l})$ which is fed back to the demapper 1472 and used as a-priori information in a new decoding attempt. Some of those iterations can significantly reduce the error rate. It turned out that the mapping of code bits to QAM/PSK transmit symbols is essential. Particularly, no gains are obtained in the iterative scheme if Gray mapping is used (see e.g. "F. Schreckenbach, N. Goertz, J. Hagenauer, and G. Bauch. Optimized symbol mappings for bit-interleaved coded modulation with iterative decoding. In IEEE Globecom, December 2003"). Therefore, the focus was on design of mappings different from Gray mapping for QAM/PSK modulation, which enable large gains of the iterative detector. Optimized mappings for turbo detection have been presented in "F. Schreckenbach, N. Goertz, J. Hagenauer, and G. Bauch. Optimized symbol mappings for bit-interleaved coded modulation with iterative decoding. In IEEE Globecom, December 2003"; and in "F. Schreckenbach, N. Goertz, J. Hagenauer, and G. Bauch. Optimized symbol mappings for bit-interleaved coded modulation with iterative decoding. IEEE Communications Letters, 7(12) :593-595, December 2003".

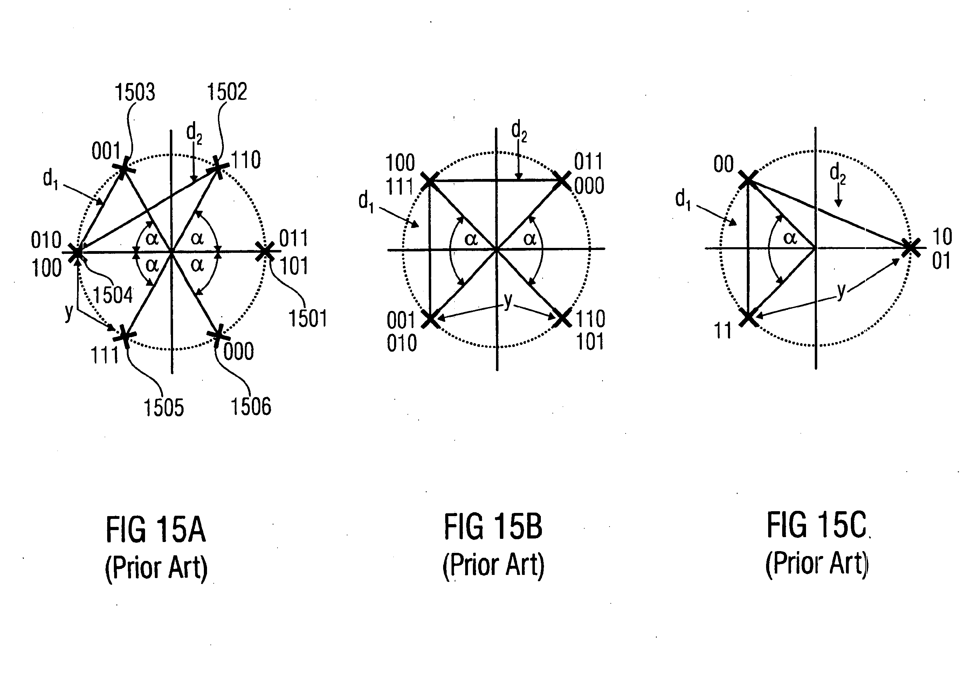

Another particularly interesting scheme was presented in "T. Clevorn and P. Vary. Iterative decoding of BICM with non-regular signal constellation sets. In International ITG Conference on Source and Channel Coding, pages 259-266, January 2004"; and in "T. Clevorn, S. Godtmann, and P. Vary. EXIT chart analysis of non-regular signal constellation sets for BICM-ID. In International Symposium on Information Theory and its Applications (ISITA), pages 21 - 26, October 2004". Here, a non-unique mapping of bits to constellation points of the modulation scheme is used, i.e. *b* bits are mapped on a constellation with *M* different points where $M < 2^b$. For example, in Figs. 15a-c, a 6-PSK constellation is used for transmission of 3 bit/symbol. Since a unique mapping of 3 bit/symbol would require a constellation with $2^3 = 8$ different points, ambiguities occur. Those ambiguities are resolved in the iterative process. The advantage of those mappings is a lower error floor on the expense of convergence at slightly higher SNR compared to unique mappings.

The discussion in "T. Clevorn and P. Vary. Iterative decoding of BICM with non-regular signal constellation sets. In International ITG Conference on Source and Channel Coding, pages 259-266, January 2004", and in "T. Clevorn, S. Godtmann, and P. Vary. EXIT chart analysis of non-regular signal constellation sets for BICM-ID. In International Symposium on Information Theory and its Applications (ISITA), pages 21 - 26, October 2004" is limited to signal constellations where all points are located on a circle, i.e. PSK type constellations. Examples are given in Figs. 15a-e. However, the distances between adjacent constellation points can be different depending on the value of $\alpha$ in Figs. 15a-c. The forward error, control (FEC) code is not taken into account in the design of the mappings in "T. Clevorn and P.

Vary. Iterative decoding of BICM with non-regular signal constellation sets. In International ITG Conference on Source and Channel Coding, pages 259-266, January 2004", and in "T. Clevorn, S. Godtmann, and P. Vary. EXIT chart analysis of non-regular signal constellation sets for BICM-ID. In International Symposium on Information Theory and its Applications (ISITA), pages 21 - 26, October 2004" The mappings with ambiguities reported in the above two references are the basis for our new proposal.

In the following, the principal of iterative demapping and decoding is described based on the system shown in Fig. 14.

Bit interleaved coded modulation with iterative ("turbo") detection is considered. The block diagram is depicted in Figure 14. The data is encoded by the encoder 1402 of a forward error control (FEC) code, e.g. by a binary convolutional code. The code bits $c_{k,l}$ are bit-interleaved according to the interleaving rule IT and mapped on complex symbols $d_k$, which are elements of a QAM/PSK signal space constellation $C$. The symbols $d_k$ are transmitted over the channel 1430. The received symbols at the channel output are denoted $y_k$. A sequence of $L$ received values of a coded block is collected in the vector $\mathbf{y} = [y_0, y_1,..., y_{L-1}]$. A soft-output demapper 1472 computes soft values for the code bits in the form of log-likelihood ratios (L-values).

$$L_e^{(d)}(\hat{c}_k) = \log_2 \frac{p(c_{k,l} = +1|\mathbf{y})}{p(c_{k,l} = -1|\mathbf{y})}$$

$$= \log_2 \frac{\sum_{d_k \in C_+} p(d_k|\mathbf{y})}{\sum_{d_k \in C_-} p(d_k|\mathbf{y})}$$

where $p(c_{k,l} = \pm 1|\mathbf{y})$ is the conditional probability that the code bit $c_{k,l}$ was transmitted given the received sequence $y$. In case of a memoryless channel, $y$ can be replaced by $y_k$. $C_+$ denotes the set of all constellation points $d_k$ associated with $c_{k,l} = +1$, $C_-$ denotes the set of all constellation points $d_k$ associated with $c_{k,l} = -1$.

For a flat fading channel with channel coefficient $h_k$ and additive white Gaussian noise $n_k$ with variance $\sigma^2$ per real dimension, i.e.

$$y_k = h_k d_k + n_k$$

it is obtained

$$\log_2 p(d_k|y_k) = \log_2\{p(y_k|d_k)P(d_k)\}$$

$$= const - \frac{1}{2\sigma^2}|y_k - h_k d_k|^2 + \frac{1}{2}\mathbf{c}(d_k)^T \mathbf{L}_e^{(d)}(\hat{c}_k)$$

where $(\cdot)^T$ means transpose, the vector $\mathbf{c}(d_k) = [c_{k,1},..., c_{k,b}]^T$ contains the code bits associated with constellation point $d_k$ and the vector $\mathbf{L}_e^{(d)}(\hat{c}_k) = \left[L_e^{(d)}(\hat{c}_{k1}), ..., L_e^{(d)}(\hat{c}_{k,b})\right]^T$ contains the respective extrinsic information which is fed back from the FEC decoder 1462.

Equation (1) may be approximated by a max-log approximation, i.e.

$$L^{(m)}(\hat{c}_{k,l}) \approx \max_{d_k \in C_+} \log_2 p(d_k|\mathbf{y}) - \max_{d_k \in C_-} \log_2 p(d_k|\mathbf{y})$$

From the a-posteriori log-likelihood ratios $L^{(m)}(\hat{c}_{k,l})$, the extrinsic information $L_e^{(m)}(\hat{c}_{k,l})$ is computed by

bitwise subtraction of the a-priori log-likelihood ratios $L_e^{(d)}(\hat{c}_{k,l})$, which are input to the demapper 1472. In the first detection step, $L_e^{(d)}(\hat{c}_{k,l}) = 0$. The extrinsic L-values are passed to the FEC decoder 1462. The FEC decoder 1462, which can be based on e.g. the BCJR algorithm as defined by "L.R. Bahl, J. Cocke, F. Jelinek, and J. Raviv. Optimal decoding of linear codes for minimizing symbol error rate. IEEE Trans-actions on Information Theory, IT-20: 284-287, March 1974", or the Viterbi algorithm, computes improved a-posteriori L-values $L^{(d)}(\hat{c}_{k,l})$ about the code bits taking into account the code constraints. Again, extrinsic information $L_e^{(d)}(\hat{c}_{k,l})$ is computed which is fed back to the demapper 1472. The demapper 1472 delivers new L-values $L_e^{(m)}(\hat{c}_{k,l})$ based on the stored received values **y** and the fed back L-values $L_e^{(d)}(\hat{c}_{k,l})$ as an additional a-priori information. Performing some iteration can significantly improve the error rate.

However, it has been shown in "S. ten Brink, J. Speidel, and R.-H. Yan. Iterative demapping for qpsk modulation. Electronic Letters, pages 1.459-1460, July 1998"; " A. Chindapol and A. Ritcey. Design, analysis and performance evaluation for BICM-ID with square QAM constellations in Rayleigh fading channels. IEEE Journal on Selected Areas in Communications, 19(5):944 - 957, May 2001";."F. Schreckenbach, N. Goertz, J. Hagenauer, and G. Bauch. Optimized symbol mappings for bit-interleaved coded modulation with iterative decoding. In IEEE Globecom, December 2003"; "F. Schreckenbach, N. Goertz, J. Hagenauer, and G. Bauch. Optimized symbol mappings for bit-interleaved coded modulation with iterative decoding. IEEE Communications Letters, 7(12):593-595, December 2003"; and in "F. Schreckenbach and G. Bauch. EXIT charts for the design of iteratively decoded multilevel modulation. In European Signal Processing Conference (EUSIPCO), September 2004" that gains by those turbo iterations can only be achieved if special mappings different from Gray mapping are used. An algorithm for finding optimized mappings has been presented in "F. Schreckenbach, N. Goertz, J. Hagenauer, and G. Bauch. Optimized symbol mappings for bit-interleaved coded modulation with iterative decoding. In IEEE Globecom, December 2003"; and in "F. Schreckenbach, N. Goertz, J. Hagenauer, and G. Bauch. Optimized symbol mappings for bit-interleaved coded modulation with iterative decoding. IEEE Communications Letters, 7(12):593-595, December 2003".

A particularly interesting mapping scheme was presented in "T. Clevorn and P. Vary. Iterative decoding of BICM with non-regular signal constellation sets. In Inter.national ITG Conference on Source and Channel Coding, pages 259-266, January 2004", and in "T. Clevorn, S. Godtmann, and P. Vary. EXIT chart analysis of non-regular signal constellation sets for BICM-ID. In International Symposium on Information Theory and its Applications (ISITA), pages 21 - 26, October 2004". Here, a non-unique mapping of bits to constellation points of the modulation scheme is used, i.e. $b$ bits are mapped on a constellation with $M$ different points where $M < 2^b$. For example, a 6-PSK constellation is used for transmission of 3 bit/symbol. Since a unique mapping of 3 bit/symbol would require a constellation with $2^3 = 8$ different points, ambiguities occur. Those ambiguities are resolved in the iterative process. The advantage of those mappings is a lower error floor on the expense of convergence at slightly higher SNR compared to unique mappings. The _bit sequences, which are assigned to the same constellation point, must differ in at least two bits. Otherwise, ambiguities cannot be resolved based on fed back extrinsic information. This is because extrinsic information means that information is only available for the other bits but not for the bit on which the current decision is taken. If two bit sequences, which are assigned to the same constellation point differ in only the last bit, the extrinsic information for the decision on the last bit would be the same for both bit sequences and, hence, no gain would be obtained by turbo iterations.

The discussion in "T. Clevorn and P. Vary. Iterative decoding of BICM with non-regular signal constellation sets. In International ITG Conference on Source and Channel Coding, pages 259-266, January 2004", and in "T. Clevorn, S. Godtmann, and P. Vary. EXIT chart analysis of non-regular signal constellation sets for BICM-ID. In International Symposium on Information Theory and its Applications (ISITA), pages 21 - 26, October 2004" is limited to signal constellations where all points are located on a circle, i.e. PSK type constellations, with $b \leq 3$ bit/symbol. Furthermore, not more than two bit sequences are mapped to a particular constellation point. Examples are given in Figs. 15a-c. However, the distances between adjacent constellation points can be different depending on the value of $\alpha$ in Figs. 15a-c.

In case of non-unique mappings as given in Figs. 15a-c, the L-values $L_e^{(m)}(\hat{c}_{k,l})$ of some bits will be zero due to the ambiguities. Consequently, the performance will be poor if no iterations are performed, i.e. iterations are mandatory whereas they are optional with unique mappings.

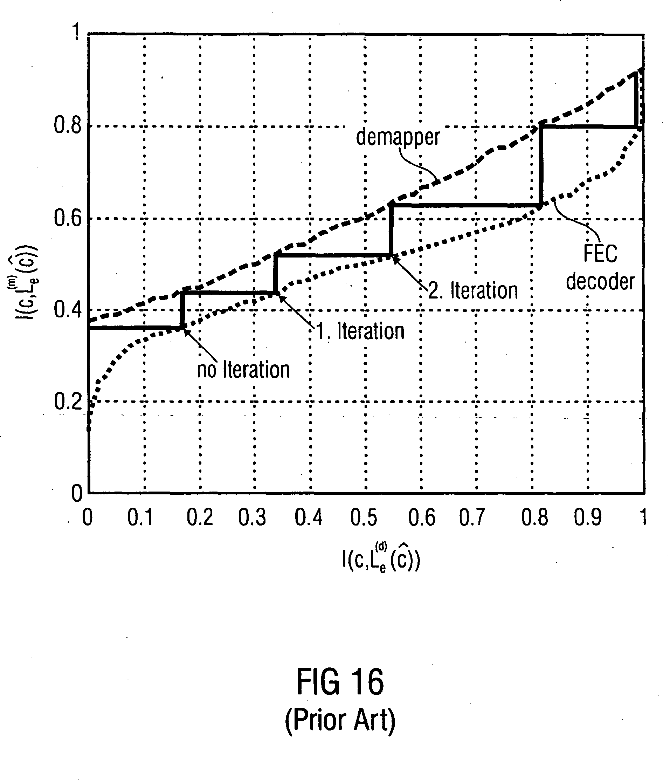

Extrinsic information transfer (EXIT) charts as introduced in "S. ten Brink. Iterative decoding trajectories of parallel concatenated codes. In 3rd ITG Conference Source and Channel Coding, pages 75-80, January 2000" are a powerful tool for evaluation of the convergence properties of turbo detectors. First, the principle of EXIT charts is explained for the serially concatenated system depicted in Figure 14. The EXIT chart shows the average mutual information between the transmitted code bits and the input L-values, which are obtained from the other turbo detection stage versus the average mutual information between the transmitted code bits and the extrinsic output L-values, which are passed to the other detection stage. For our system, the x-axis is the mutual information $I\left(\mathbf{c}, \mathbf{L}_e^{(d)}(\hat{\mathbf{c}})\right)$ at the input of the demapper, which is the extrinsic information fed back from the FEC decoder. The y-axis depicts the mutual information $I\left(\mathbf{c}, \mathbf{L}_e^{(m)}(\hat{\mathbf{c}})\right)$ at the output of the demapper, which is passed to the decoder as input information. Curves for the relation between input and output mutual information are plotted for both the demapper 1472 and the FEC decoder 1462. The trajectory between the two curves starting from the demapper 1472 with no a priori information illustrates the performance improvements by turbo iterations. An example with the theoretical trajectory is given in Fig. 16. Error free detection, i.e. $I\left(\mathbf{c}, \mathbf{L}_e^{(d)}(\hat{\mathbf{c}})\right)$ = 1 is possible, if the trajectory can proceed through a tunnel between the two curves, i.e. the demapper and decoder curves do not cross.

The average mutual information between code bits c and L-values *L(c)* can be computed by numerical evaluation of " S. ten Brink. Convergence behavior of iteratively decoded parallel concatenated codes. IEEE Transactions on Communications, 49(10):1727-1737, October 2001".

$$I(\mathbf{c}, \mathbf{L}(\mathbf{c})) = \sum_{c=+1,-1} \int_{-\infty}^{\infty} p(L(c)|c) P(c)$$

$$\times \log_2 \frac{2p(L(c)|c)}{p(L(c)|c = +1) + p(L(c)|c = -1)} \, dL(c)$$

For the EXIT chart computation, it is assumed that the input L-values $L_e^{(m)}\left(\hat{c}_{k,l}\right)$ and $L^{(d)}\left(\hat{c}_{k,l}\right)$ are statistically independent and Gaussian distributed.

The EXIT chart can be used for optimization of the mapping. Here, the intention is to obtain demapper EXIT curves, which reach as far as possible to the upper right corner since this means a reduction of the error floor, which cannot be totally avoided with a non-recursive inner turbo component as the QAM/PSK mapper. In order to find those optimized mappings, the binary switching algorithm was applied as explained in "F. Schreckenbach, N. Goertz, J. Hagenauer, and G. Bauch. Optimized symbol mappings for bit-interleaved coded modulation with iterative decoding. In IEEE Globecom, December 2003" and in "F. Schreckenbach, N. Goertz, J. Hagenauer, and G. Bauch. Optimized symbol mappings for bit-interleaved coded modulation' with iterative decoding. IEEE Communications Letters,. 7(12):593-595, December 2003", where a cost function is used, which maximizes the end point of the demapper EXIT curve, i.e. for perfect extrinsic information $I\left(\mathbf{c}, \mathbf{L}_e^{(d)}(\hat{\mathbf{c}})\right)$ = 1 at the demapper input. Perfect extrinsic information means that all bits but the one on which the current decision is taken are perfectly known. In this case, the decision is between only two remaining constellation points.

The proposed mappings with ambiguities show extremely poor performance if no iterations are performed since the ambiguities can only be resolved by iterations. Consequently, even in high SNR, iterations are mandatory.

Moreover, low cost receivers, which may not perform iterations, cannot be applied.

Another disadvantage of the proposals in "T. Clevorn and P. Vary. Iterative decoding of BICM with non-regular signal constellation sets. In International ITG Conference on Source and Channel Coding, pages 259-266, January 2004", and in "T. Clevorn, S. Godtmann, and P. Vary. EXIT chart analysis of non-regular signal constellation sets for BICM-ID. In In - ternational Symposium on Information Theory and its Applications (ISITA), pages 21 - 26, October 2004" is that the mappings are restricted to PSK type constellations. This limits the achievable bandwidth-efficiency.

It is an object of the present invention to provide a transmitter, a receiver, a method for transmitting, a method for receiving and a computer program which allow a digital transmission with an improved performance.

This object is achieved by a transmitter according to claim 1, a receiver according to claim 18, a method for transmitting according to claim 19, a method for receiving according to claim 22 and a computer program according to claim 23.

The present invention provides a tranmitter for generating a transmit signal, comprising:

a forward error correction encoder for generating a first number of code bits from a second number of information bits, the first number being larger than the second number, a ratio between the second number and the first number defining a code ratio; and

a mapper for mapping a group of code bits to a transmit symbol, the group of code bits including at least three code bits, wherein a sequence of transmit symbols represent the transmit signal,

wherein the mapper is operative to map in accordance with a constellation diagram having a plurality of constellation points, each constellation point corresponding to a transmit symbol, and wherein at least two different possible groups of code bits correspond to the same constellation point, and wherein the the at least two different possible groups of code bits have at least two primary bits at mutual corresponding positions in the code groups, which are identical to each other and at least one secondary bit, at a mutual corresponding position which is different in the two groups of bits.

The present invention further provides a receiver for generating an information signal, comprising:

a demapper for demapping a transmit symbol to a group of code bits, the group of code bits including at least three code bits,

wherein the demapper is operative to..de-map in accordance with a constellation diagram having a plurality of constellation points, each constellation point corresponding to a transmit symbol, and wherein at least two different possible groups of code bits correspond "to the same constellation point, and wherein the at least two different possible groups of code bits have at least two primary bits at mutual corresponding positions in the groups, which are identical to each other and at least one secondary bit, at a mutual corresponding position which is different in the two groups of bits; and a forward error correcting decoder for generating a second number of information bits from a third number of code bits, the third number of code bits being larger than the second number of information bits, wherein a sequence of information bits represents the information signal.

The present invention proposes a new non-unique mapping method with ambiguities, where the error control code is included in the design. According to the present invention, ambiguities occur only in certain bit positions for the least important code bits, which enable reasonable performance even without iterations. If no iterations are performed, the receiver sees an effective higher code rate. The scheme is similar to a hybrid ARQ (Automatic Repeat Request) scheme. However, the incremental redundancy is not separately transmitted over the channel, which would reduce the bandwidth-efficiency but becomes effective during the iterations in the receiver. To this end, iterations reduce the effective code rate. This can be viewed as a kind of hierarchical modulation in which low cost receivers, which perform no iterations, see a higher code rate than high-end receivers, which perform turbo iterations.

The proposed scheme enables turbo bit-interleaved coded modulation with improved performance, e.g. lower error floor compared to existing proposals.

The scheme enables bandwidth-efficient transmission with a reduced size of the modulation alphabet due to non-unique mapping. This reduces the detection complexity. Furthermore, the peak to average power ratio is reduced, which relaxes the requirements for linearity of amplifiers. The back off of amplifiers can be reduced which results in lower battery consumption and costs.

In contrast to existing proposals with non-unique mapping, the proposal according to the present invention enables reasonable performance also without iterations. This allows for hierarchical modulation with low cost receivers, which perform no iterations and high-end receivers, which perform iterations and thereby lower the effective code rate.

The proposed non-unique mapping can be viewed as kind of a hierarchical modulation. Iterations are only performed when necessary, e.g. a low cost receiver will not perform iterations but unlike mappings, which have ambiguities in all bit positions, it will achieve a reasonable BER. A high-end receiver may obtain a better performance by turbo iterations.

Another aspect is that due to the smaller number of candidate transmit symbols $d_k$, the complexity of the demapper can be reduced with non-unique mappings compared to unique mappings.

The present invention is based on a partially non-unique mapping, wherein code bits to be transmitted are splitted into two sets of Code bits. According to the inventive mapping scheme, the bits of the first sets are mapped into bit positions with no-ambiguities and the bits in the other set are mapped to positions with ambiguities. The first code bits can be derived in the receiver without the need of any iterations and can be used in order to decode the other non-unique bits by performing iterations.

According to an embodiment the code bits are splitted in accordance with a FEC (FEC; FEC = Forward Error Correction Code) coding. According to this embodiment, a rate-compatible punctured convolutional (RCPC) code as defined in "J. Hagenauer. Rate-compatible punctured convolutional codes (RCPC codes) and their applications. IEEE Transactions on Communications, 36(4):389-400, April 1988" can be used.

According to this embodiment, the forward error correction encoder is operative to use an error correction code adapted to generate for the number of information bits, a first group of more important code bits and a second group of less important code bits, and the transmitter further comprises a selector for selecting the first group of more important code bits as the at least two primary bits and the second group of less important code bits as the at least one secondary bit. An example for a very simple error correction code is a repeat code that repeats a group of two information bits, such that the group of code bits comprises four bits, e.g. twice the group of information bits. Here, possible important bits are combinations from the first and second bit, the' first and fourth bit or the second and third bit. For codes that generate a higher rate of redundancy, the decision on the importance of bits can be additionally based on the bit-position of redundant bits within the group of code bits. The splitting of the code bits can be performed by using puncturing codes or puncturing matrixes that depend on the code implemented in the encoder.

According to an embodiment, the mappings are non-unique in the two left-most bits of a transmit symbol and unique in the two right-most bits. This means that the bits with ambiguities are mapped to the right-most bits and the bits with no ambiguities are mapped to the left-most bits. The mappings can be optimized as follows: First, the two right-most bits are fixed using a Gray mapping, which yields optimum BER performance if no iterations are performed. Given this constraint on the right-most bits, the two left-most bits are optimized using the binary switching algorithm as defined in "F. Schreckenbach, N. Goertz, J. Hagenauer, and G. Bauch. Optimized symbol mappings for bit-interleaved coded modulation with iterative decoding. In IEEE Globecom, December 2003", and in "F. Schreckenbach, N. Goertz, J. Hagenauer, and G. Bauch. Optimized symbol mappings for bit-interleaved coded modulation with iterative decoding. IEEE Communications Letters, 7(12) :593-595, December 2003 », such that the end point of the EXIT curve is maximized.

According to an embodiment, the two sets of code bits are separately interleaved and afterwards combined to respective transmit symbols. Alternatively, the interleaved first code bits can be premapped to a first selection of possible constellation points and afterwards, a further mapper selects from the reselected constellation points, in accordance with the second set of code bits, the final constellation point to be transmitted.

According to a further embodiment, a ratio between the number of code bits in the first set and code bits in the second set of code bits is equal or smaller than the code ratio of the encoder used in the transmitter. This ensures that a secure detection of the transmitted information bits is possible without the need of any iterations within the receiver.

Preferred embodiments of the present invention are described hereinafter making reference to the dependent drawings.

Fig. 1        a PSK signal constellation with a partially non-unique mapping according to the present application;

Fig. 2        a block diagram of a transmitter according to an embodiment of the present application;

Fig. 3a       a block diagram of a transmitter according to a further embodiment of the present application;

Fig. 3b       an exemplary signal flow for a transmitter as shown in Fig. 3;

Fig. 4        a block diagram of a transmitter according to a further embodiment of the present invention;

Fig. 4b       an exemplary signal flow for a transmitted as shown in Fig.,4a;

Fig. 5        a transmitter and a receiver according to a further embodiment of the present application;

Figs. 6a-d    PSK signal constellations with a partially non-unique mapping according to embodiments of the present invention;

Fig. 7        BER performance of partially non-unique mappings;

Figs. 8a,b    optimized unique mappings for 16-PSK at 16-QAM according to the present invention;

Figs. 9a-c    optimized non-unique PSK mappings according to an embodiment of the present application;

Figs. 10a-d   optimized non-unique QAM mappings according to an embodiment of the present application;

Fig. 11       EXIT chart for PSK mappings;

Fig. 12       EXIT part for QAM mappings;

Fig. 13       relevant distances with perfect ex... in-formation for 16-PSK and 12-PSK constellations:

Fig. 14       a block diagram of iterative demapping and decoding according to the prior art;

Fig. 15a-c    PSK signal constellations with non-unique mappings according to the prior art; and

Fig. 16        EXIT chart for a demapper according to the prior art.

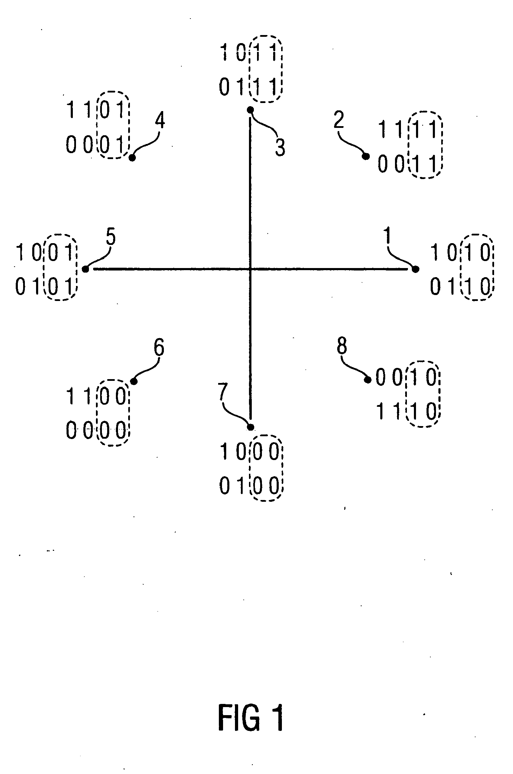

Fig. 1 shows signal space constellation points of a partially non-unique mapping according to the present invention. Fig. 1 shows PSK constellation points being arranged on a circle. Two transmit symbols are mapped to each of the 8 constellation points. The transmit symbols 1010 and 0101 are mapped to the first constellation point 1, the transmit symbols 1111 and 0011 are mapped to the second constellation point 2, the transmit symbols 1011 and 0111 are mapped to the third constellation point 3, the transmit symbols 1101 and 0001 are mapped to the fourth constellation point 4, the transmit symbols 1010 and 0101 are mapped to the fifths constellation point 5, the transmit symbols 1100 and 0000 are mapped to the sixth constellation point 6, the transmit symbols 1000 and 0100 are mapped to the seventh constellation point 7 and finally the transmit symbols 0010 and 1110 are mapped to the eights constellation point 8.

Each transmit symbol is a 4 bit transmit symbol. As can be seen from Fig. 1, the two right-most bits of each transmit symbol, marked by dotted circles, are mapped uniquely to a constellation point, whereas the left-most two bits of each transmit symbol are mapped non-uniquely to the constellation points. For example, in constellation point 1, the two right most-bits 10 are identical in both transmit symbols which correspond to the constellation point 1. The other two bits are mapped non-uniquely to the constellation point 1. This means that the left two bits of the first transmit symbol 10 are different from the two left bits 01 of the second transmit symbol which correspond to the first constellation point.

This means that from a received constellation point, the two right-most bits of the transmit symbol can be derived without the need of any iterations. To derive the left-most bits, iterations are necessary. These iterations will have a low error rate, as there are already two bits known from each transmit symbol.

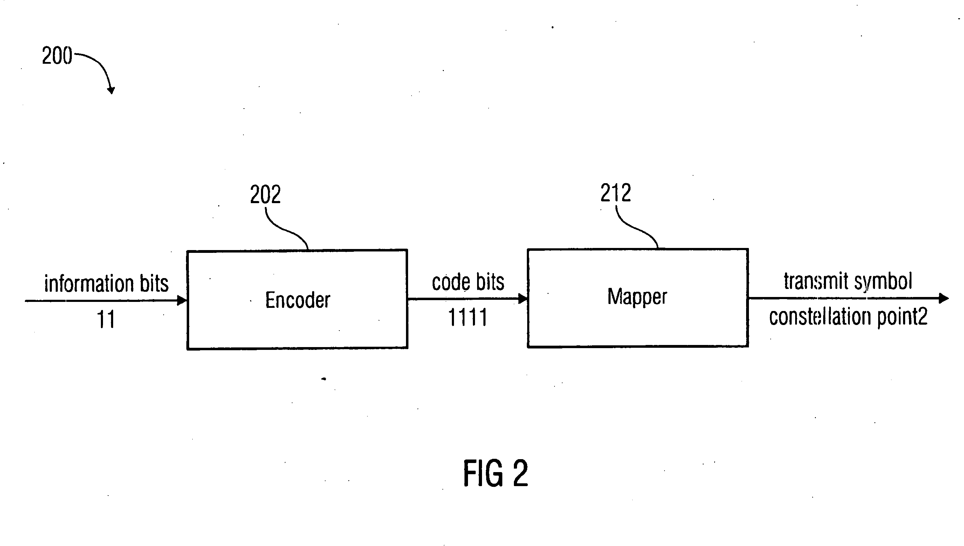

Fig. 2 shows a schematic view of a transmitter according to an embodiment of the present application. The transmitter 100 comprises an encoder 102 and a mapper 112. The encoder 102 can be a forward error correction encoder for generating a first number of code bits from a second number of information bits, the first number being larger than the second number, a ratio between the second number and the first number defining a code ratio. The mapper 112 is configured to receive the code bits from the encoder 102 and to map groups of code bits to a transmit symbol which corresponds to a constellation point. The mapper 112 is configured to map the code.bits according to a mapping diagram or a mapping scheme which can be based on the signal space constellation points as shown in Fig. 1.

For example, as shown in Fig. 2, the encoder 102 can be configured to receive a two information bits 11 that are part of a sequence of information bits to be transmitted by the transmitter and to generate a group of code bits 1111 from the information bits 11. In accordance to Fig. 1, the mapper 112 is configured to map the group of code bits 1111 to a transmit symbol which corresponds to the constellation point 2 in Fig. 1.

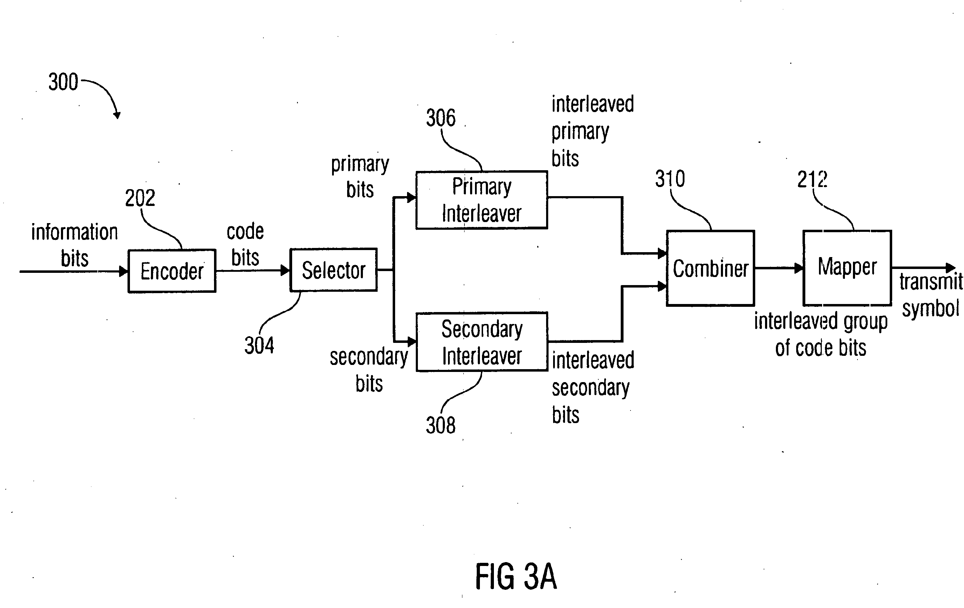

Fig. 3a shows a further schematic view of a transmitter according to an embodiment of the present application. Further to the transmitter shown in Fig. 2, the transmitter 300, as shown in Fig. 3a, comprises a selector 304, a primary interleaver 306, a secondary interleaver 308 and a combiner 310. The encoder 102 is configured to receive information bits and to provide code bits according to a forward error correction code. The selector 304 is configured to receive the code bits and separate the code bits into primary bits and secondary bits. The primary bits are the bits to be mapped on non-ambiguous positions of the constellation point. The secondary bits are the bit to be mapped on ambiguous positions of the constellations point. According to this embodiment, the primary bits are received by the primary interleaver 306 which is configured to interleave received sequences of primary bits. Accordingly, the secondary interleaver 308 is configured to interleave received sequences of secondary bits and to provide interleaved secondary bits. The combiner 310 recombines the interleaved primary bits from the primary interleaver 306 with the interleaved secondary bits from the secondary interleaver 308 and outputs interleaved code bits. The groups of interleaved code bits are mapped by the mapper 112 to correspondent transmit symbols. Again, the mapper 112 can use a mapping diagram as it is shown in Fig. 1.

According to this invention, the code bits of the encoder are not directly interleaved and mapped but first the code bits are divided in two sets of code bits which are separately interleaved and afterwards recombined.

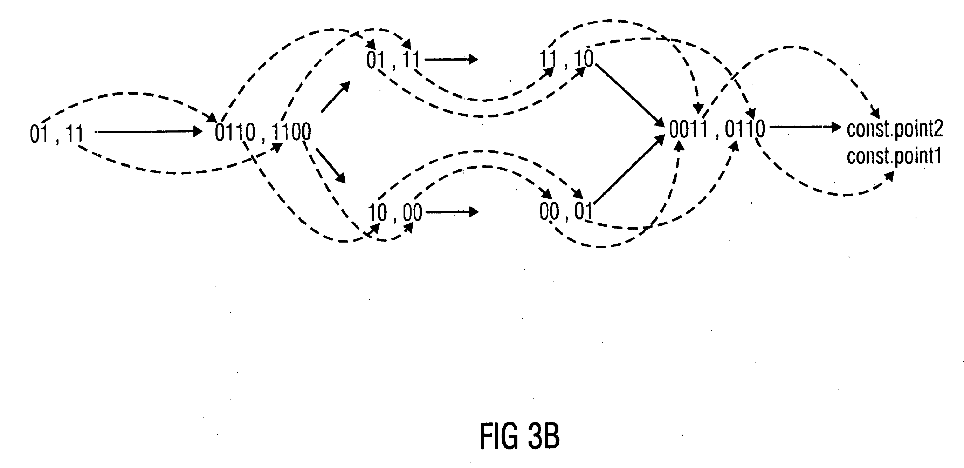

Fig. 3b shows an exemplary flow diagram of signals through the transmitter shown in Fig. 3a. The described signal constellations are exemplary only and do not correspond to real encoders or interleavers. Two consecutive information bit sequences 01 and 11 are encoded by the encoder 102 into two groups of code bits 0110 and 1100. The selector 304 selects the first two bits of the code bits 01 and 00 as primary bits and selects the last two bits of the code bits 10 and 00 as secondary bits.

The primary bits and secondary bits are interleaved by the interleaver 306, 308 which exemplarily changes the first and the last bits of the two groups of primary bits and secondary bits. Thus, the interleaver outputs' interleaved primary bits 11, 10 and interleaved secondary bits 00, 01. The combiner 310 is configured to combine interleaved primary bits with corresponding interleaved secondary bits. Thus, two groups of interleaved code bits 0011 and 0110 are outputted by the combiner 310 and input by the mapper 212 which mappes the first group of code bits 0011 to the constellation point 6 and the second group of code bits 0110 to the constellation point 4 according to Fig. 1.

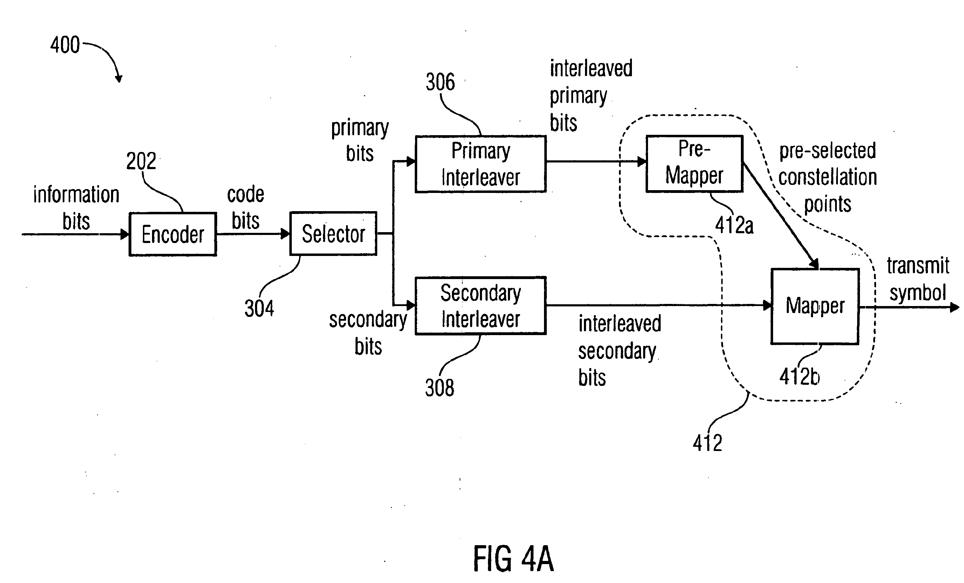

Fig. 4a shows a schematic view of a transmitter according to a further embodiment of the present invention. In difference to the embodiment shown in Fig. 3a, the transmitter 400 comprises a mapper 412 which comprises a premapper 412a and a following mapper 412b. The premapper 412a is configured to receive the interleaved primary bits from the primary interleaver 306. The premapper 412a is configured to preselect constellation points which are preferably used to transmit the primary bits that are to be mapped on unique bit positions. The following mapper 412b selects the final constellation point from the preselected constellation points in view of the interleaved secondary bits which are to be mapped on non-unique bit positions of the transmit symbol.

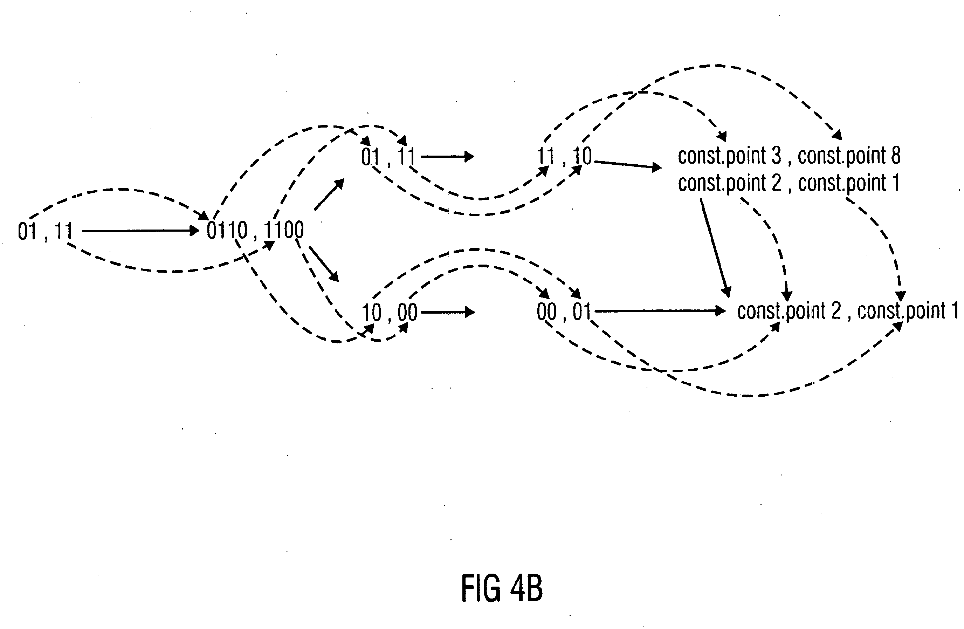

Fig. 4b shows an exemplary flow diagram of signals in the transmitter 400 shown in Fig. 4a. In difference to Fig. 3b, the interleaved primary bits 11, 10 are not combined with the interleave secondary bits 00, 01. Instead, the premapper 412a preselects the constellation point 3 or the constellation point 2 for the first group of interleaved primary bits and the constellation point 8 and the constellation point 1 for the second group of interleave primary bits 10. This selection is in accordance with Fig. 1, wherein the interleaved primary bits correspond to the right-most bits of the transmit symbols shown in Fig.1. Now using the left-most bits of the diagram shown in Fig. 1, constellation point 2 is used due to the first group of interleaved secondary bit combination 00 and the constellation point 1 is chosen due to the interleaved secondary bit combination 01 of the second group of interleaved secondary bits.

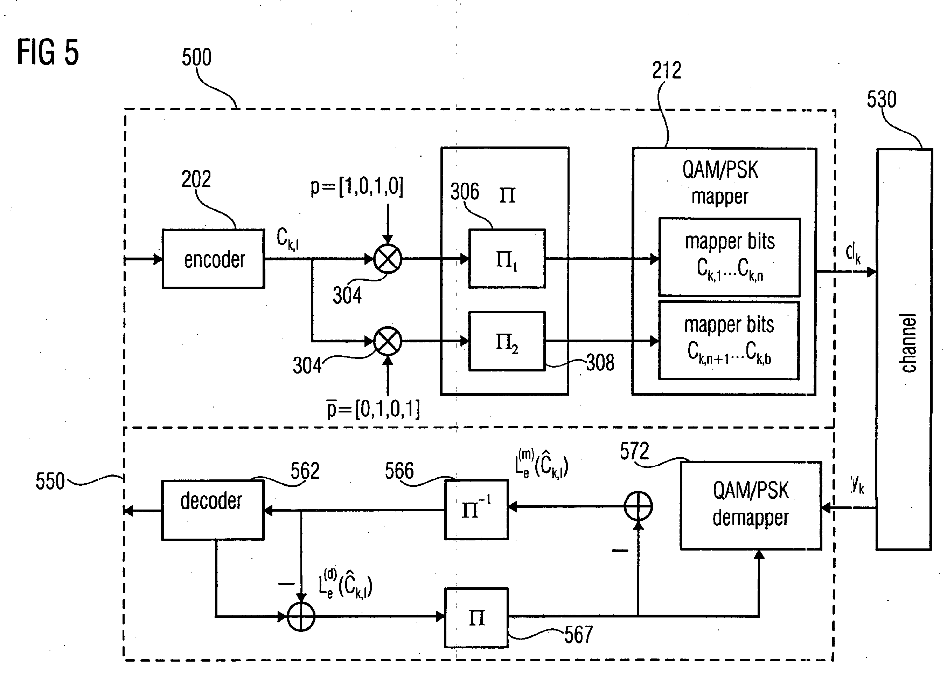

Fig. 5. shows a schematic view of a transmitter 500 and a receiver 550 according to a further embodiment of the present application. The transmitter 500 comprises an encoder 202, a selector 304, a primary interleaver 306 and a secondary interleaver 308 and a mapper 212 comprising a first mapper for the primary code bits and a second mapper for the secondary code bits. The constellation points generated by the mapper 212 are transmitted via a channel 530 to the receiver 550. The receiver 550 comprises a decoder 562, a de-interleaver 566, an interleaver 567 and a demapper 572. The functionality of the blocks shown in Fig. 5 correspond to the blocks described in detail in combination with Fig. 14. In difference to Fig. 14, the code bits are separated in primary bits and secondary bits by the selector 304 in the transmitter 400. Further, the primary code bits and the secondary code bits are separately interleaved and mapped. In accordance with the present invention, the mapper 212 and the demapper 572 are based on a different mapping scheme than the mapper 1412 and the demapper 1472 shown in Fig. 14. Nevertheless, the receiver 550 comprises the same structure as the receiver described in Fig. 14.

The transmitter 500 and the receiver 550 shown in Fig. 5 are based on a joint design of FEC coding and partially unique mapping.

According to this embodiment, the mapping is modified such that ambiguities can occur only in certain bit positions. Furthermore, it is proposed to take the FEC code into account in the decision, which code bits are mapped to bit positions with ambiguities. To be more specific, the least important code bits should be mapped to bit positions with ambiguities in order to optimize the error rate performance without iterations.

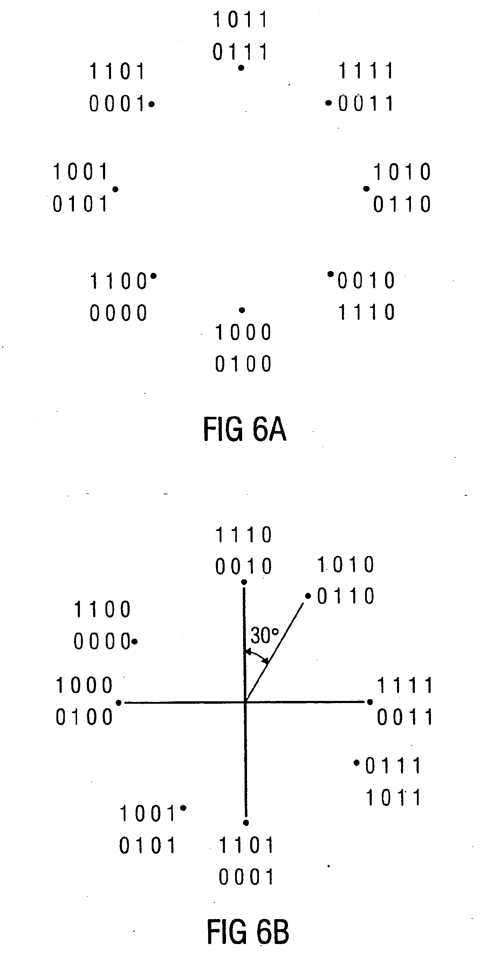

It is proposed to use a rate-compatible punctured code for FEC coding, e.g. a rate-compatible punctured convolutional (RCPC) code. A puncturing pattern p at the selector 304 indicates which code bits are more ($p_k = 1$) or less ($p_k = 0$) important. The puncturing pattern is used in order to separate the code bits into two sets, which are separately interleaved. The bits, which are normally punctured, are then mapped on bit positions with ambiguities whereas the bits, which are not punctured, are mapped on bit positions with no ambiguities. Thus, the bits being punctured are the secondary bits. Examples for proposed mappings are given in Figs 6a-d.

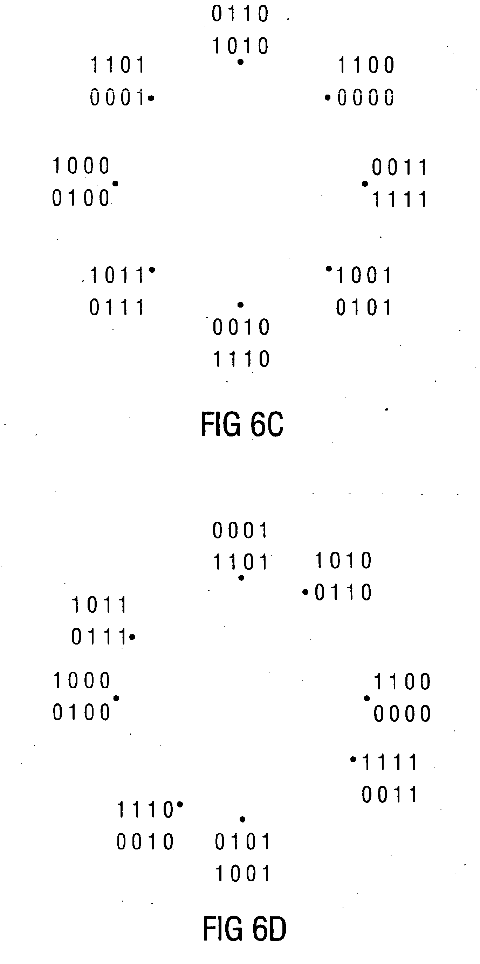

Fig. 6a shows a sym. 8-PSK s, Fig. 6b shows an asym 8-PSK s, Fig. 6c shows a sym. 8-PSK e and Fig. 6d shows an asym 8-PSK e.

The constellation diagram shown in Fig. 6a has already been described in Fig. 1. The constellation diagrams shown in Figs. 6b-d correspond to the constellation diagram described in Fig. 1.

The mappings shown in Figs. 6a-d are non-unique in the two left-most bits and unique in the two right-most bits. The mappings have been optimized as follows: First, the two right-most bits are fixed using a Gray mapping, which yields optimum BER performance if no iterations are performed. Given this constraint on the right-most bits, the two left-most bits are optimized using the binary switching algorithm such that the end point of the EXIT curve is maximized.

Whereas adjacent constellation points in the mappings of Fig. 6a and 6c have the same Euclidean distance, the distance is additionally optimized in the constellations in Figs. 6b and 6d.

According to the diagram shown in Fig. 6b, a first constellation point corresponds to the group of code bits 1111 and 0011, a second constellation point, corresponding to the group of code bits 1010 and 0110, a third constellation point, corresponding to the group of code bits 1110 and 0010, a fourth constellation point corresponding to the group of code bits 1100 and 0000, a fifth constellation point, corresponding to the group of code bits 1000 and 0100, a sixth constellation point, corresponding to the group of code bits 10001 and 0101, a seventh constellation point, corresponding to the group of code bits 1101 and 0001, and a eighth constellation point, corresponding to the group of code bits 0111 and 10101.

According to the diagram shown in Fig. 6c, a first constellation point corresponds to the group of code bits 0011 and 1111, a second constellation point, corresponding to the group of code bits 1100 and 0000, a third constellation point, corresponding to the group of code bits 0110 and 1010, a fourth constellation point corresponding to the group of code bits 1101 and 0001, a fifth constellation point, corresponding to the group of code bits 1000 and 0100, a sixth constellation point, corresponding to the group of code bits 1011 and 0111, a seventh constellation point, corresponding to the group of code bits 0010 and 1110, and an eighth constellation point, corresponding to the group of code bits 1001 and 0101.

According to the diagram shown in Fig. 6d, a first constellation point corresponds to the group of code bits 1100 and 0000, a second constellation point, corresponding to the group of code bits 1010 and 0110, a third constellation point, corresponding to the group of code bits 0001 and 1101, a fourth constellation point corresponding to the group of code bits 1011 and 0111, a fifth constellation point, 0111, a fifth constellation point, corresponding to the group of code bits 1000 and 0100, a sixth constellation point, corresponding to the group of code bits 1110 and 0010, a seventh constellation point, corresponding to the group of code bits 0101 and 1001, and a eighth constellation point, corresponding to the group of code bits 1111 and 0011.

in a first demapping step in the receiver 550 shown in Fig. 5, the ambiguities cannot be resolved and consequently, the demapper L-values for the bit positions with non-unique mapping will be zero. The advantage of the partially non-unique mappings in Figs. 6a-d is, that the FEC decoder gets non-zero L-values for the most important bits, which have been transmitted in bit positions with unique mapping, and is able to produce a reasonable error rate even without iterations, e.g, if a code with rate $R$ =1/3 is applied in combination with one of the mappings in Figs.6a-d, the code in the first decoding step will be punctured to rate $R$ = 2/3 by non resolvable ambiguities. In the iterations, non-zero L-values become available also for the other code bits which means that basically iterations lower the effective code rate. This is similar to a hybrid ARQ scheme with incremental redundancy where originally punctured bits are additionally transmitted if necessary. In contrast to ARQ, with non-unique mapping the incremental redundancy is transmitted in bit positions with ambiguities, which unlike ARQ does not cause a bandwidth expansion. The incremental redundancy is made available by iterations.

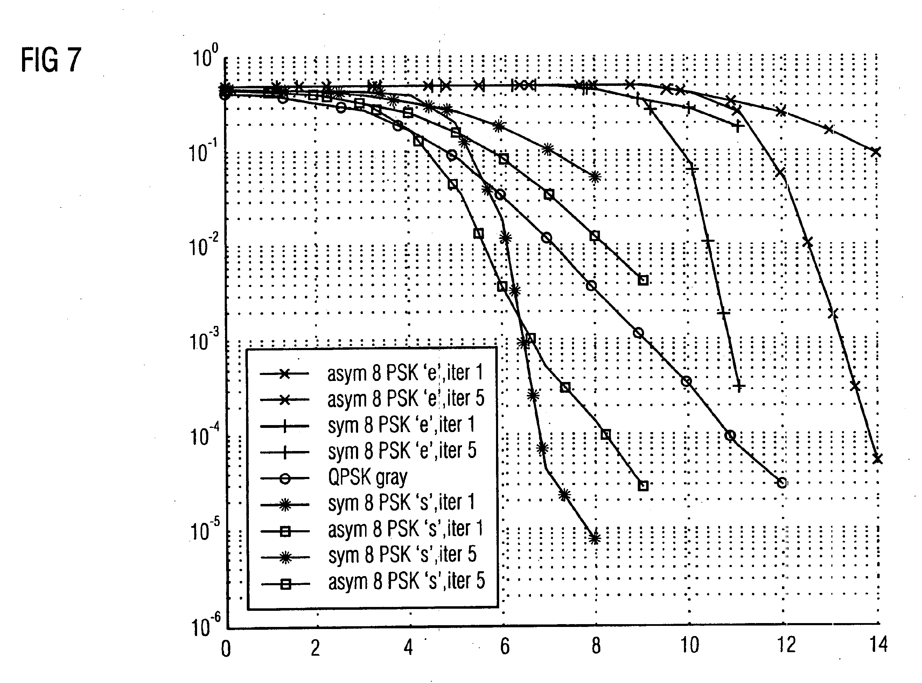

Fig. 7 shows simulation results for the BER performance of the partially unique mappings in Figs. 6a-6d. For channel coding a rate 1/3 convolutional code was used. For comparison, the performance of QPSK with Gray mapping and a convolutional code of rate 2/3 is included, i.e. with the same transmission rate. It can be concluded that the partially unique mappings allow significant turbo gains but still show reasonable performance if no iterations are applied. E.g. the mapping asym 8-PSK s performs only 1 dB worse than QPSK if no iterations are done but yields more than 4 dB gain over QPSK with Gray coding at BER $10^{-4}$ after 5 iterations. The BER performance is of partially non-unique mappings with 4 bit/symbol.

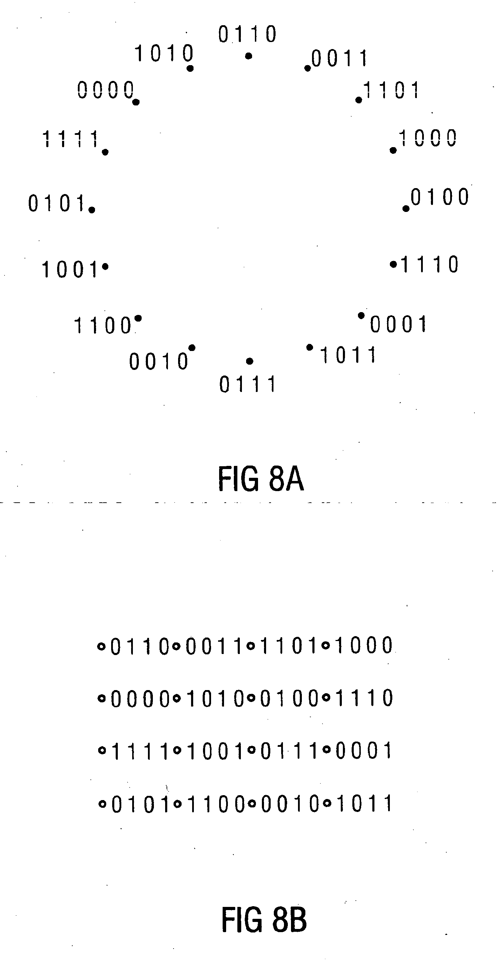

The following embodiments are restricted to mappings where the Euclidean distance between adjacent points is the same for all constellation elements since it is found that the impact of shifting some constellation points is relatively small. Examples for transmission of $b$ = 4 bit/symbol with $M < 2^b$ = 16 constellation points are given. A unique mapping would require $M$ = 16 constellations points. Optimized unique mappings for 16-PSK and 16-QAM modulation are depicted in Figs. 8a, 8b.

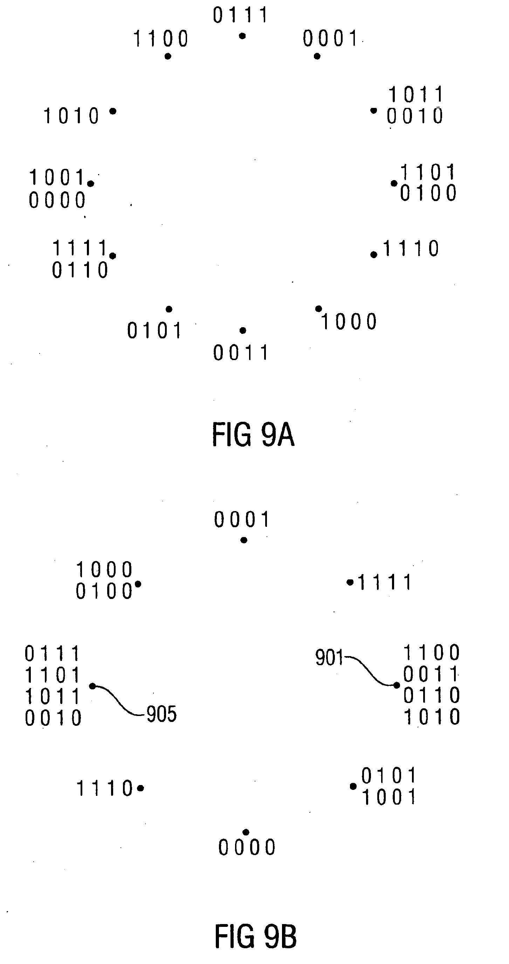

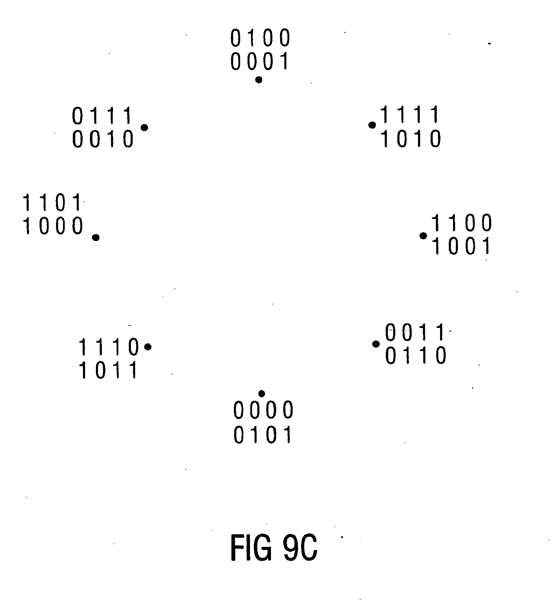

First, the question how many constellation points should be used is considered. Optimized non-unique mappings are depicted in Figs. 9a - c. for PSK type constellations with $M$ = 12 and $M$ = 8 constellation points. The mappings with $M$ = 8 constellation points differ in the number of bit sequences, which are assigned to a particular symbol.

The inventive approach is not limited to four bit transmit symbols or code groups, as shown in the figures, but can consist of three bits or more bits. Further, as shown in Fig. 9b, more than two, e.g. 3 or more transmit symbols can be assigned to a single constellation point. In Fig. 9b four transmit symbols are assigned to a first constellation point 901 and a fifth constellation point 905. The first constellation point 901 corresponds to the transmit symbols 1100, 0011, 0110, 0110, 1010. Again; two of the transmit symbols 0110 and 1010 correspond to the first constellation point 901 have two identical bits 10 at mutual corresponding positions. Alternatively, (not shown in Fig. 9b) all four transmit symbols of the first constellation point can have identical bits at the same bit positions. The identical bits do not have to be located in the two right most bit positions but can be at any bit position of the transmit symbol. Further, the inventive approach can be implemented for mapping diagrams comprising any kind of number of constellation points larger than one.

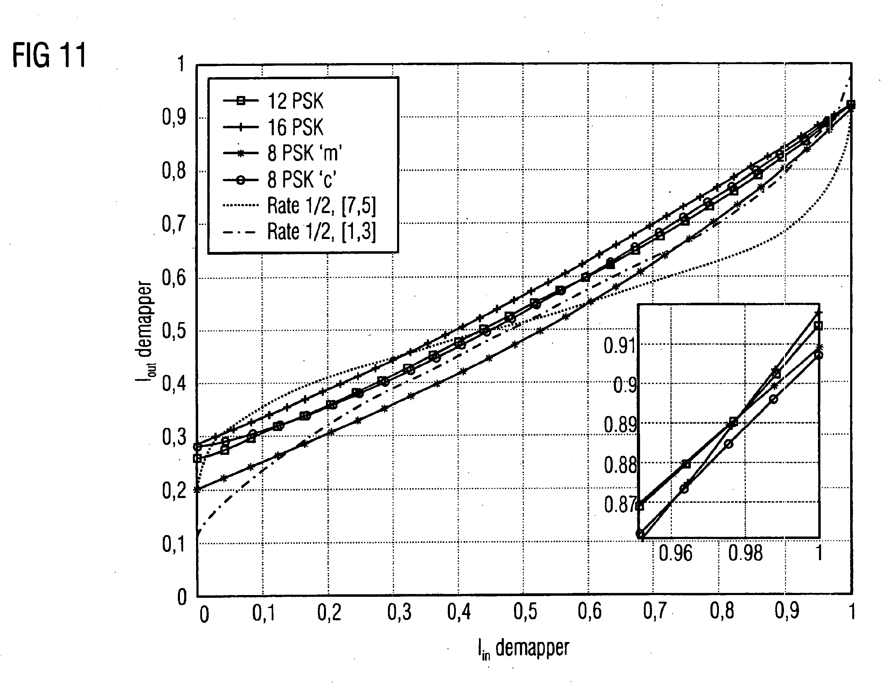

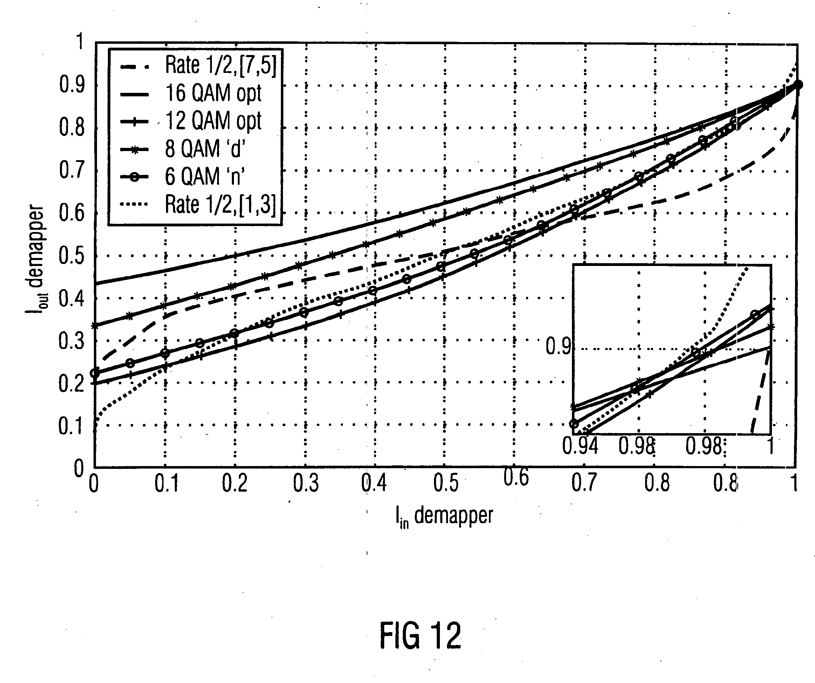

The EXIT chart for the PSK constellations in Figs. 8a, b is depicted in Fig. 11. It can be observed that the constellation with $M$ = 12 points reaches a higher end point in the EXIT chart than is achievable with the optimized 16-PSK constellation. This means that the error floor is reduced. Fig. 11 is an EXIT chart for PSK mappings. $E_8/N_0$ =10$dB$. Fig. 12 is an EXIT chart for QAM mappings. Es/N0 = 10dB.

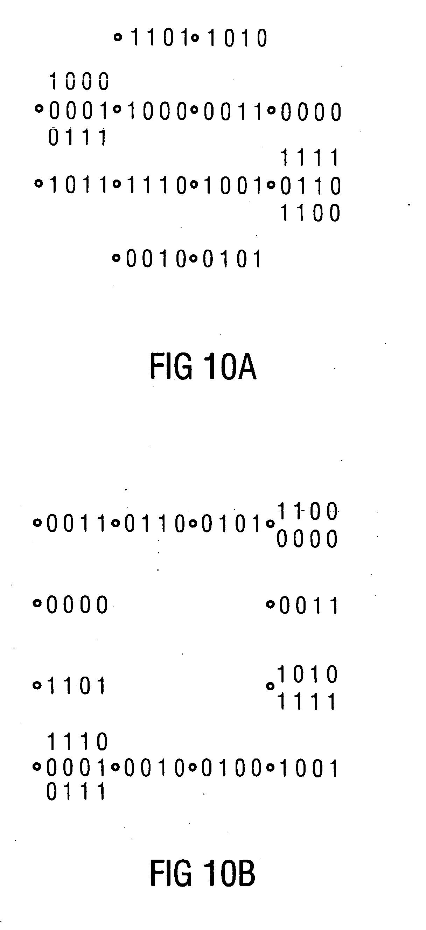

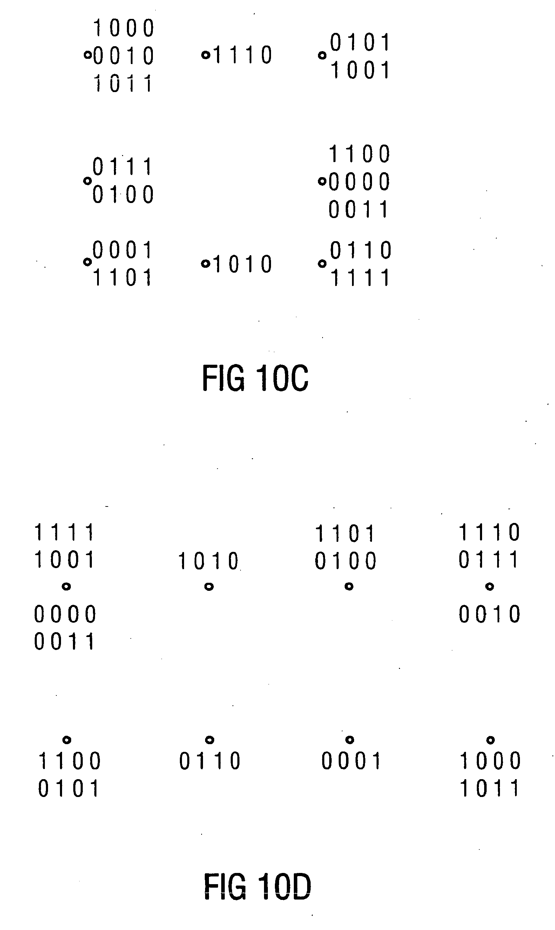

An even higher end point can be obtained with the constellation 8-PSK m. However, for this constellation, the turbo scheme converges at significantly higher SNR since the EXIT curve starts at a significantly lower value. Earlier, convergence can be obtained with the constellation 8-PSK c on the expense of a higher error floor. It can be concluded that the constellation size should be reduced by less than a factor of two in order to obtain a good trade-off between early convergence and low error floor. Similar results are obtained for QAM-constellations in Figs.10a - d.

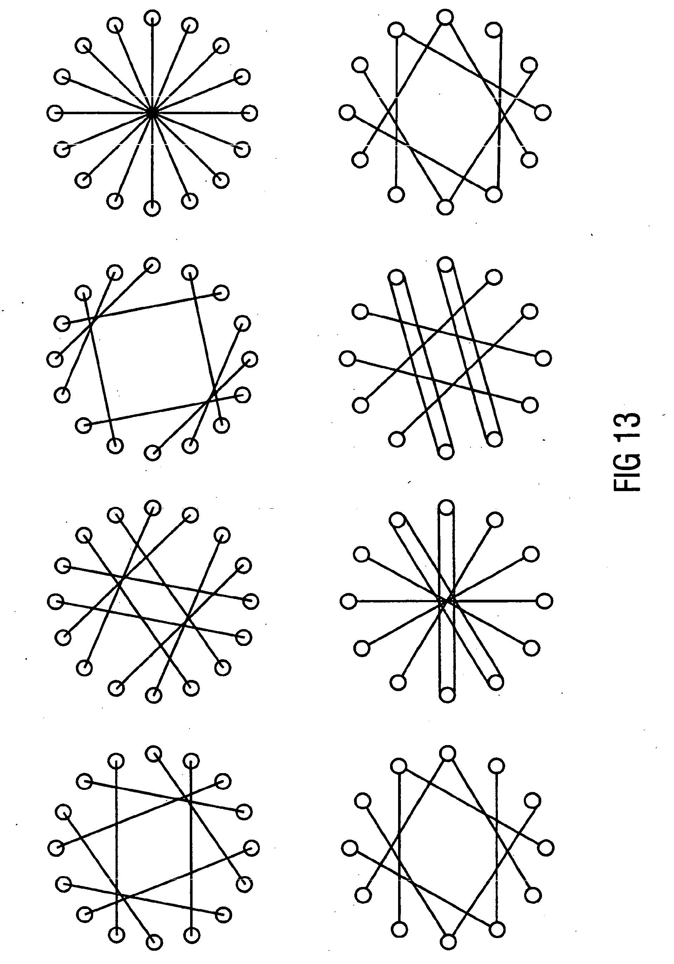

The effect that a higher end point of the EXIT curve can be obtained with non-unique mappings rather than with unique mappings is illustrated in Figure 13. The end point in the EXIT curve implies perfect extrinsic information at the input of the demapper 572, i.e. all bits but the bit on which the current decision is taken are perfectly known.

Consequently, the error probability is determined by the Euclidean distances between constellations Points, which differ in the respective unknown bit. These distances are indicated in Fig. 13. It can be observed that a PSK constellation with a reduced number of constellation points allows decreasing the probability of a decision between points with minimum Euclidean distance.

The inventive approach of splitting the code bits into two sets according to a puncturing pattern and mapping the bits in one set to bit positions with no ambiguities and the bits in the other set to bit positions with ambiguities can be used from methods for transmitting an information signal and for receiving a transmit signal. The mapping scheme is not restricted to PSK and QAM constellations, but can be used for any other signal space constellation diagram based, for example, on QPSK, PAM, QAM, PSK, M-QAM, M-PSK, wherein M is a number equal to or greater than 1.

Depending on the conditions, the inventive methods for transmitting an information signal and for receiving a transmit signal may be implemented in hardware or in software. The implementation may be performed on a digital storage medium, in particular a disc or a CD using control signals which may be read out electronically, which may thus cooperate with a programmable computer system so that the method is performed. Generally, the invention is also present in a computer program product comprising a program code stored on a machine readable carrier for performing the inventive method for encrypting original data when the computer program product runs on a computer. In other words, the invention may also be realized as a computer program having a program code for performing the method for encrypting original data when the computer program runs on a computer.

## Claims

1. Transmitter for generating a transmit signal, comprising:

   a forward error correction encoder (202) for generating a first number of code bits from a second number of information bits, the first number being larger than the second number, a ratio between the second number and the first number defining a code ratio; and
   a mapper (212) for mapping a group of code bits to a transmit symbol, the group of code bits including at least three code bits, wherein a sequence of transmit symbols represent the transmit signal,

   wherein the mapper is operative to map in accordance with a constellation diagram having a plurality of constellation points, each constellation point corresponding to a transmit symbol, and wherein at least two different possible groups of code bits correspond to the same constellation point, and wherein the at least two different possible groups of code bits have at least two primary bits at mutual corresponding positions in the code groups, which are identical to each other and at least one secondary bit, at a mutual corresponding position which is different in the two groups of bits; and
   wherein the forward error correction encoder (202) is operative to use an error correction code adapted to generate for the number of information bits, a first group of more important code bits and a second group of less important code bits, and
   further comprising a selector (304) for selecting the first group of more important code bits as the at least two primary bits and the second group of less important code bits as the at least one secondary bit.

2. Transmitter according to claim 1, wherein the forward error correction encoder (202) is operative to generate the second group of less important code bits from redundant bits within the first number of code bits.

3. Transmitter according to claim 1, wherein the selector (304) is operative to separate the primary bits from the at least one secondary bit of the code bits from the encoder (202); and
   a primary interleaver (306) being operative to interleave the primary code bits and to provide interleaved primary code bits;
   a secondary interleaver being operative to interleave the at least one secondary code bit and to provide interleaved secondary code bits; and
   a combiner (310) being operative to combine interleaved primary code bits with the at least one corresponding interleaved secondary bit and to provide the combined group of interleaved code bits to the mapper (212).

4. Transmitter according to claim 1, wherein the selector (304) is operative to separate the primary bits from the at least one secondary bit of the code bits from the encoder (202), and
   wherein the mapper (212) further comprises a primary mapper (412a) being operative to premap the primary bits in accordance with a primary mapping diagram to at least two of the constellation points and further comprising a secondary mapper (412b) being operative to map the at least one secondary bit in accordance with a secondary mapping diagram to one of the at least two constellation points being selected by the primary mapper, wherein the constellation point selected by the secondary mapper corresponds to the transmit symbol of the transmit signal.

5. Transmitter according to claim 4, further comprising a primary interleaver (306) being operative to interleave the primary bits from the selector (304) and to provide interleaved primary bits to the primary mapper (412a), and a secondary interleaver (308) being operative to interleave the secondary bits from the selector and to provide interleaved secondary bits to the secondary mapper (412b).

6. Transmitter according to one of claims 1 to 5, wherein a ratio between the number of primary bits and the number of secondary bits of a group of code bits is equal or smaller than the code ratio.

7. Transmitter according to one of claims 1 to 6, wherein the plurality of constellation points are signal based constellation points having different phases.

8. Transmitter according to claim 7, wherein the constellation points are successively arranged on a circle, each constellation point having a different phase.

9. Transmitter according to claim 8, wherein a first constellation point (1) corresponds to the group of code bits 1011 and 0111, a second constellation point (2), corresponding to the group of code bits 1111 and 0011, a third constellation point (3), corresponding to the group of code bits 1011 and 0111, a fourth constellation point (4) corresponding to the group of code bits 1101 and 0001, a fifth constellation point (5), corresponding to the group of code bits 1001 and 0101, a sixth constellation point (6), corresponding to the group of code bits 1100 and 0000, a seventh constellation point (7), corresponding to the group of code bits 1000 and 0100, and a eighth constellation point (8), corresponding to the group of code bits 0010 and 1110.

10. Transmitter according to claim 8, wherein a first constellation point corresponds to the group of code bits 1111 and 0011, a second constellation point, corresponding to the group of code bits 1010 and 0110, a third constellation point, corresponding to the group of code bits 1110 and 0010, a fourth constellation point corresponding to the group of code bits 1100 and 0000, a fifth constellation point, corresponding to the group of code bits 1000 and 0100, a sixth constellation point, corresponding to the group of code bits 10001 and 0101, a seventh constellation point, corresponding to the group of code bits 1101 and 0001, and a eighth constellation point, corresponding to the group of code bits 0111 and 10101.

11. Transmitter according to claim 8, wherein a first constellation point corresponds to the group of code bits 0011 and 1111, a second constellation point, corresponding to the group of code bits 1100 and 0000, a third constellation point, corresponding to the group of code bits 0110 and 1010, a fourth constellation point corresponding to the group of code bits 1101 and 0001, a fifth constellation point, corresponding to the group of code bits 1000 and 0100, a sixth constellation point, corresponding to the group of code bits 1011 and 0111, a seventh constellation point, corresponding to the group of code bits 0010 and 1110, and a eighth constellation point, corresponding to the group of code bits 1001 und 0101.

12. Transmitter according to claim 8, wherein a first constellation point corresponds to the group of code bits 1100 and 0000, a second constellation point, corresponding to the group of code bits 1010 and 0110, a third constellation point, corresponding to the group of code bits 0001 and 1101, a fourth constellation point corresponding to the group of code bits 1011 and 0111, a fifth constellation point, corresponding to the group of code bits 1000 and 0100, a sixth constellation point, corresponding to the group of code bits 1110 and 0010, a seventh constellation point, corresponding to the group of code bits 0101 and 1001, and a eighth constellation point, corresponding to the group of code bits 1111 and 0011.

13. Transmitter according to one of claims 1 to 12, wherein the constellation diagram is one of the following mapping schemes:

   QPSK, PAM, QAM, PSK, M-QAM, M-PSK, M being a number equal to or greater than one.

14. Transmitter according to one of claims 1 to 13, wherein the encoder is operative to use a rate compatible punctured code for forward error correction and wherein the selector is operative to use a puncturing pattern correspondent to the forward error correction code to separate the primary bits from the secondary bits.

**15.** Transmitter according to one of claims 1 to 14, wherein the group of code bits comprises four bits, and wherein the two left-most bits are the primary bits and the two right-most bits are the secondary bits.

**16.** Transmitter according to one of claims 4 or 5, wherein the primary mapping diagram is based on a Gray mapping scheme.

**17.** Transmitter according to one of claims 4 or 5, wherein the secondary mapping diagram is based on a binary switching algorithm.

**18.** Receiver for generating an information signal comprising:

a demapper (572) for demapping a transmit symbol to a group of code bits, the group of code bits including at least three code bits,

wherein the demapper is operative to de-map in accordance with a constellation diagram having a plurality of constellation points, each constellation point corresponding to a transmit symbol, and wherein at least two different possible groups of code bits correspond to the same constellation point, and wherein the at least two different possible groups of code bits have at least two primary bits at mutual corresponding positions in the groups, which are identical to each other and at least one secondary bit, at a mutual corresponding position which is different in the two groups of bits;
a selector (304) for selecting the at least two primary bits as a first group of more important code bits and the at least one secondary bit as a second group of less important code bits; and
a forward error correcting decoder for generating a second number of information bits from a third number of code bits, the third number of code bits being larger than the second number of information bits,
wherein a sequence of information bits represents the information signal; and
wherein the forward error correction encoder (202) is operative to use an error correction code adapted to generate the number of information bits, from the first group of more important code bits and the second group of less important code bits.

**19.** Receiver according to claim 18, wherein the receiver is operative to use an iterative decoding scheme based on a turbo detection.

**20.** Receiver according to one of claims 17 or 18, wherein the forward error correcting decoder is operative to use a BCJR algorithm or a Viterbi algorithm for decoding.

**21.** Method for generating a transmit signal, the method comprising:

generating a first number of code bits from a second number of information bits, the first number being larger than the second number, a ratio between the second number and the first number defining a code ratio;
mapping a group of code bits to a transmit symbol, the group of code bits including at least three code bits,

wherein a sequence of transmit symbols represent the transmit signal,
wherein a mapper for performing the step of mapping is operative to map in accordance with a constellation diagram having a plurality of constellation points, each constellation point corresponding to a transmit symbol, and wherein at least two different possible groups of code bits correspond to the same constellation point, and wherein the at least two different possible groups of code bits have at least two primary bits at mutual corresponding positions in the groups, which are identical to each other and at least one secondary bit, at a mutual corresponding position which is different in the two groups of bits; and
wherein a forward error correction encoder (202) for performing the step of generating is operative to use an error correction code adapted to generate for the number of information bits, a first group of more important code bits and a second group of less important code bits, and
selecting the first group of more important code bits as the at least two primary bits and the second group of less important code bits as the at least one secondary bit.

**22.** Method for generating an information signal, the method comprising:

demapping a transmit symbol to a group of code bits, the group of code bits including at least three code bits,

wherein a demapper for performing the step of demapping is operative to demap in accordance with a constellation diagram having a plurality of constellation points, each constellation point corresponding to a transmit symbol, and wherein at least two different possible groups of code bits correspond to the same constellation point, and wherein the at least two different possible groups of code bits have at least two primary bits at mutual corresponding positions in the groups, which are identical to each other and at least one secondary bit, at a mutual corresponding position which is different in the two groups of bits;

selecting the at least two primary bits as a first group of more important code bits and the at least one secondary bit as a second group of less important code bits;

generating a second number of information bits from a first number of code bits, the first number of code bits being larger than the second number of information bits, wherein a sequence of information bits represents the information signal; and

wherein a forward error correction encoder (202) for performing the step of generating is operative to use an error correction code adapted to generate the number of information bits, from the first group of more important code bits and the second group of less important code bits.

23. Computer program for performing at least one of the methods according to claims 21 or 22, wherein the computer program runs on a computer.

**Patentansprüche**

1. Sender zum Erzeugen eines Sendesignals mit:

   einem Vorwärtsfehlerkorrekturcodierer (202) zum Erzeugen einer ersten Anzahl von Code-Bits aus einer zweiten Anzahl von Informationsbits, wobei die erste Anzahl größer als die zweite Anzahl ist, wobei ein Verhältnis zwischen der zweiten Anzahl und der ersten Anzahl ein Code-Verhältnis definiert; und
   einem Abbilder (212) zum Abbilden einer Gruppe von Code-Bits auf ein Sendesymbol, wobei die Gruppe von Code-Bits zumindest drei Code-Bits umfasst, wobei eine Sequenz von Sendesymbolen das Sendesignal repräsentiert,

   wobei der Abbilder wirksam ist, um gemäß einem Konstellationsdiagramm mit einer Mehrzahl von Konstellationspunkten abzubilden, wobei jeder Konstellationspunkt einem Sendesymbol entspricht, und wobei zumindest zwei unterschiedliche mögliche Gruppen von Code-Bits dem gleichen Konstellationspunkt entsprechen, und wobei die zumindest zwei unterschiedlichen möglichen Gruppen von Code-Bits zumindest zwei Primärbits an gegenseitig entsprechenden Positionen in den Codegruppen aufweisen, die zueinander identisch sind, und zumindest ein Sekundärbit an einer gegenseitig entsprechenden Position, in den zwei Gruppen von Bits unterschiedlich; und
   wobei der Vorwärtsfehlerkorrekturcodierer (202) wirksam ist, um einen Fehlerkorrekturcode zu verwenden, der angepasst ist, um für die Anzahl von Informationsbits eine erste Gruppe von wichtigeren Code-Bits und eine zweite Gruppe von weniger wichtigen Code-Bits zu erzeugen, und
   ferner mit einem Selektor (304) zum Auswählen der ersten Gruppe von wichtigeren Code-Bits als den zumindest zwei Primärbits und der zweiten Gruppe von weniger wichtigen Code-Bits als das zumindest eine Sekundärbit.

2. Sender gemäß Anspruch 1, bei dem der Vorwärtsfehlerkorrekturcodierer (202) wirksam ist, um die zweite Gruppe von weniger wichtigen Code-Bits aus redundanten Bits in der ersten Anzahl von Code-Bits zu erzeugen.

3. Sender gemäß Anspruch 1, bei dem der Selektor (304) wirksam ist, um die Primärbits von dem zumindest einen Sekundärbit der Code-Bits aus dem Codierer (202) zu trennen; und
   eine Primärverschachtelungsvorrichtung (306) wirksam ist, um die Primär-Code-Bits zu verschachteln und verschachtelte Primär-Code-Bits bereitzustellen;
   eine Sekundärverschachtelungsvorrichtung wirksam ist, um das zumindest eine Sekundär-Code-Bit zu verschachteln und verschachtelte Sekundär-Code-Bits bereitzustellen; und
   ein Kombinierer (310) wirksam ist, um verschachtelte Primär-Code-Bits mit dem zumindest einen entsprechenden verschachtelten Sekundärbit zu kombinieren und die kombinierte Gruppe von verschachtelten Code-Bits an den Abbilder (212) bereitzustellen.

4. Sender gemäß Anspruch 1, bei dem der Selektor (304) wirksam ist, um die Primärbits von dem zumindest einen Sekundärbit der Code-Bits aus dem Codierer (202) zu trennen, und
   bei dem der Abbilder (212) ferner einen Primärabbilder (412a) aufweist, der wirksam ist, um die Primärbits gemäß einem Primärabbildungsdiagramm auf zumindest zwei der Konstellationspunkte vorabzubilden, und ferner einen Sekundärabbilder (412b) aufweist, der wirksam ist, um das zumindest eine Sekundärbit gemäß einem Sekundärabbildungsdiagramm auf einen der zumindest zwei Konstellationspunkte abzubilden, die durch den Primärabbilder gewählt sind, wobei der Konstellationspunkt, der durch den Sekundärabbilder gewählt ist, dem Sendesymbol des Sendesignals entspricht.

5. Sender gemäß Anspruch 4, ferner mit einer Primärverschachtelungsvorrichtung (306), die wirksam ist, um die Primärbits aus dem Selektor (304) zu verschachteln und verschachtelte Primärbits an den Primärabbilder (412a) bereitzustellen, und

   einer Sekundärverschachtelungsvorrichtung (308), die wirksam ist, um die Sekundärbits aus dem Selektor zu verschachteln und verschachtelte Sekundärbits an den Sekundärabbilder (412b) bereitzustellen.

6. Sender gemäß einem der Ansprüche 1 bis 5, bei dem ein Verhältnis zwischen der Anzahl von Primärbits und der Anzahl von Sekundärbits einer Gruppe von Code-Bits gleich dem oder kleiner als das Codeverhältnis ist.

7. Sender gemäß einem der Ansprüche 1 bis 6, bei dem die Mehrzahl von Konstellationspunkten signalbasierte Konstellationspunkte mit unterschiedlichen Phasen sind.

8. Sender gemäß Anspruch 7, bei dem die Konstellationspunkte aufeinanderfolgend auf einem Kreis angeordnet sind, wobei jeder Konstellationspunkt eine unterschiedliche Phase aufweist.

9. Sender gemäß Anspruch 8, bei dem ein erster Konstellationspunkt (1) der Gruppe von Code-Bits 1011 und 0111 entspricht, ein zweiter Konstellationspunkt (2) der Gruppe von Code-Bits 1111 und 0011 entspricht, ein dritter Konstellationspunkt (3) der Gruppe von Code-Bits 1011 und 0111 entspricht, ein vierter Konstellationspunkt (4) der Gruppe von Code-Bits 1101 und 0001 entspricht, ein fünfter Konstellationspunkt (5) der Gruppe von Code-Bits 1001 und 0101 entspricht, ein sechster Konstellationspunkt (6) der Gruppe von Code-Bits 1100 und 0000 entspricht, ein siebter Konstellationspunkt (7) der Gruppe von Code-Bits 1000 und 0100 entspricht und ein achter Konstellationspunkt (8) der Gruppe von Code-Bits 0010 und 1110 entspricht.

10. Sender gemäß Anspruch 8, bei dem ein erster Konstellationspunkt der Gruppe von Code-Bits 1111 und 0011 entspricht, ein zweiter Konstellationspunkt der Gruppe von Code-Bits 1010 und 0110 entspricht, ein dritter Konstellationspunkt der Gruppe von Code-Bits 1110 und 0010 entspricht, ein vierter Konstellationspunkt der Gruppe von Code-Bits 1100 und 0000 entspricht, ein fünfter Konstellationspunkt der Gruppe von Code-Bits 1000 und 0100 entspricht, ein sechster Konstellationspunkt der Gruppe von Code-Bits 10001 und 0101 entspricht, ein siebter Konstellationspunkt der Gruppe von Code-Bits 1101 und 0001 entspricht und ein achter Konstellationspunkt der Gruppe von Code-Bits 0111 und 10101 entspricht.

11. Sender gemäß Anspruch 8, bei dem ein erster Konstellationspunkt der Gruppe von Code-Bits 0011 und 1111 entspricht, ein zweiter Konstellationspunkt der Gruppe von Code-Bits 1100 und 0000 entspricht, ein dritter Konstellationspunkt der Gruppe von Code-Bits 0110 und 1010 entspricht, ein vierter Konstellationspunkt der Gruppe von Code-Bits 1101 und 0001 entspricht, ein fünfter Konstellationspunkt der Gruppe von Code-Bits 1000 und 0100 entspricht, ein sechster Konstellationspunkt der Gruppe von Code-Bits 1011 und 0111 entspricht, ein siebter Konstellationspunkt der Gruppe von Code-Bits 0010 und 1110 entspricht und ein achter Konstellationspunkt der Gruppe von Code-Bits 1001 und 0101 entspricht.

12. Sender gemäß Anspruch 8, bei dem ein erster Konstellationspunkt der Gruppe von Code-Bits 1100 und 0000 entspricht, ein zweiter Konstellationspunkt der Gruppe von Code-Bits 1010 und 0110 entspricht, ein dritter Konstellationspunkt der Gruppe von Code-Bits 0001 und 1101 entspricht, ein vierter Konstellationspunkt der Gruppe von Code-Bits 1011 und 0111 entspricht, ein fünfter Konstellationspunkt der Gruppe von Code-Bits 1000 und 0100 entspricht, ein sechster Konstellationspunkt der Gruppe von Code-Bits 1110 und 0010 entspricht, ein siebter Konstellationspunkt der Gruppe von Code-Bits 0101 und 1001 entspricht und ein achter Konstellationspunkt der Gruppe von Code-Bits 1111 und 0011 entspricht.

13. Sender gemäß einem der Ansprüche 1 bis 12, bei dem das Konstellationsdiagramm eines der folgenden Abbildungsschemas ist:

   QPSK, PAM, QAM, PSK, M-QAM, M-PSK, wobei M eine Zahl gleich oder größer eins ist.

**EP 1 817 886 B1**

14. Sender gemäß einem der Ansprüche 1 bis 13, bei dem der Codierer wirksam ist, um einen ratenkompatiblen punktierten Code für eine Vorwärtsfehlerkorrektur zu verwenden, und bei dem der Selektor wirksam ist, um ein Punktierungsmuster entsprechend dem Vorwärtsfehlerkorrekturcode zu verwenden, um die Primärbits von den Sekundärbits zu trennen.

15. Sender gemäß einem der Ansprüche 1 bis 14, bei dem die Gruppe von Code-Bits vier Bits aufweist und bei dem die zwei höchstwertigen Bits die Primärbits sind und die zwei niederwertigsten Bits die Sekundärbits sind.

16. Sender gemäß einem der Ansprüche 4 oder 5, bei dem das Primärabbildungsdiagramm auf einem Gray-Abbildungsschema basiert.

17. Sender gemäß einem der Ansprüche 4 oder 5, bei dem das Sekundärabbildungsdiagramm auf einem Binär-Schaltalgorithmus basiert.

18. Empfänger zum Erzeugen eines Informationssignals mit:

   einem Rückabbilder (572) zum Rückabbilden eines Sendesymbols auf eine Gruppe von Code-Bits, wobei die Gruppe von Code-Bits zumindest drei Code-Bits umfasst,

   wobei der Rückabbilder wirksam ist, um gemäß einem Konstellationsdiagramm mit einer Mehrzahl von Konstellationspunkten rückabzubilden, wobei jeder Konstellationspunkt einem Sendesymbol entspricht, und wobei zumindest zwei unterschiedliche mögliche Gruppen von Code-Bits dem gleichen Konstellationspunkt entsprechen, und wobei die zumindest zwei unterschiedlichen möglichen Gruppen von Code-Bits zumindest zwei Primärbits an gegenseitig entsprechenden Positionen in den Gruppen aufweisen, die zueinander identisch sind, und zumindest ein Sekundärbit an einer gegenseitig entsprechenden Position, in den zwei Gruppen von Bits unterschiedlich;
   einem Selektor (304) zum Auswählen der zumindest zwei Primärbits als einer ersten Gruppe von wichtigeren Code-Bits und des zumindest einen Sekundärbits als einer zweiten Gruppe von weniger wichtigen Code-Bits; und
   einem Vorwärtsfehlerkorrekturdecodierer zum Erzeugen einer zweiten Anzahl von Informationsbits aus einer dritten Anzahl von Code-Bits, wobei die dritte Anzahl von Code-Bits größer als die zweite Anzahl von Informationsbits ist, wobei eine Sequenz von Informationsbits das Informationssignal repräsentiert; und
   wobei der Vorwärtsfehlerkorrekturcodierer (202) wirksam ist, um einen Fehlerkorrekturcode zu verwenden, der angepasst ist, um die Anzahl von Informationsbits zu erzeugen, aus der ersten Gruppe von wichtigeren Code-Bits und der zweiten Gruppe von weniger wichtigen Code-Bits.

19. Empfänger gemäß Anspruch 18, wobei der Empfänger wirksam ist, um ein iteratives Decodierungsschema basierend auf einer Turbo-Erfassung zu verwenden.

20. Empfänger gemäß einem der Ansprüche 17 oder 18, bei dem der Vorwärtsfehlerkorrekturdecodierer wirksam ist, um einen BCJR-Algorithmus oder einen Viterbi-Algorithmus zum Decodieren zu verwenden.

21. Verfahren zum Erzeugen eines Sendesignals, wobei das Verfahren folgende Schritte aufweist:

   Erzeugen einer ersten Anzahl von Code-Bits aus einer zweiten Anzahl von Informationsbits, wobei die erste Anzahl größer als die zweite Anzahl ist, wobei ein Verhältnis zwischen der zweiten Anzahl und der ersten Anzahl ein Code-Verhältnis definiert;
   Abbilden einer Gruppe von Code-Bits auf ein Sendesymbol, wobei die Gruppe von Code-Bits zumindest drei Code-Bits umfasst, wobei eine Sequenz von Sendesymbolen das Sendesignal repräsentiert,

   wobei ein Abbilder zum Durchführen des Schrittes zum Abbilden wirksam ist, um gemäß einem Konstellationsdiagramm mit einer Mehrzahl von Konstellationspunkten abzubilden, wobei jeder Konstellationspunkt einem Sendesymbol entspricht, und wobei zumindest zwei unterschiedliche mögliche Gruppen von Code-Bits dem gleichen Konstellationspunkt entsprechen, und wobei die zumindest zwei unterschiedlichen möglichen Gruppen von Code-Bits zumindest zwei Primärbits an gegenseitig entsprechenden Positionen in der Gruppen aufweisen, die identisch zueinander sind, und zumindest ein Sekundärbit an einer gegenseitig entsprechenden Position, in den zwei Gruppen von Bits unterschiedlich; und
   wobei ein Vorwärtsfehlerkorrekturcodierer (202) zum Durchführen des Schrittes zum Erzeugen wirksam ist, um einen Fehlerkorrekturcode zu verwenden, der angepasst ist, um für die Anzahl von Informationsbits eine erste Gruppe von wichtigeren Code-Bits und eine zweite Gruppe von weniger wichtigen Code-Bits zu erzeugen, und

**EP 1 817 886 B1**

Auswählen der ersten Gruppe von wichtigeren Code-Bits als den zumindest zwei Primärbits und der zweiten Gruppe von weniger wichtigen Code-Bits als das zumindest eine Sekundärbit

22. Verfahren zum Erzeugen eines Informationssignals, wobei das Verfahren folgende Schritte aufweist:

Rückabbilden eines Sendesymbols auf eine Gruppe von Code-Bits, wobei die Gruppe von Code-Bits zumindest drei Code-Bits umfasst,

wobei ein Rückabbilder zum Durchführen des Schrittes zum Rückabbilden wirksam ist, um gemäß einem Konstellationsdiagramm mit einer Mehrzahl von Konstellationspunkten rückabzubilden, wobei jeder Konstellationspunkt einem Sendesymbol entspricht, und wobei zumindest zwei unterschiedliche mögliche Gruppen von Code-Bits dem gleichen Konstellationspunkt entsprechen, und
wobei die zumindest zwei unterschiedlichen möglichen Gruppen von Code-Bits zumindest zwei Primärbits an gegenseitig entsprechenden Positionen in den Gruppen aufweisen, die zueinander identisch sind, und zumindest ein Sekundärbit an einer gegenseitig entsprechenden Position, in den zwei Gruppen von Bits unterschiedlich;
Auswählen der zumindest zwei Primärbits als einer ersten Gruppe von wichtigeren Code-Bits und des zumindest einen Sekundärbits als einer zweiten Gruppe von weniger wichtigen Code-Bits;
Erzeugen einer zweiten Anzahl von Informationsbits aus einer ersten Anzahl von Code-Bits, wobei die erste Anzahl von Code-Bits größer als die zweite Anzahl von Informationsbits ist, wobei eine Sequenz von Informationsbits das Informationssignal repräsentiert; und
wobei ein Vorwärtsfehlerkorrekturcodierer (202) zum Durchführen des Schrittes zum Erzeugen wirksam ist, um einen Fehlerkorrekturcode zu verwenden, der angepasst ist, um die Anzahl von Informationsbits zu erzeugen, aus der ersten Gruppe von wichtigeren Code-Bits und der zweiten Gruppe von weniger wichtigen Code-Bits.

23. Computerprogramm zum Durchführen zumindest eines der Verfahren gemäß den Ansprüchen 21 oder 22, wobei das Computerprogramm auf einem Computer abläuft.

**Revendications**

1. Emetteur pour générer un signal de transmission, comprenant:

un codeur de correction d'erreur directe (202) destiné à générer un premier nombre de bits de code à partir d'un deuxième nombre de bits d'information, le premier nombre étant supérieur au deuxième nombre, un rapport entre le deuxième nombre et le premier nombre définissant un rapport de code; et
une unité de mappage (212) destinée à effectuer le mappage d'un groupe de bits de code, pour obtenir un symbole de transmission, le groupe de bits de code comprenant au moins trois bits de code, où une séquence de symboles de transmission représente le signal de transmission,

dans lequel l'unité de mappage est opérationnelle pour effectuer le mappage selon un schéma de constellation présentant une pluralité de points de constellation, chaque point de constellation correspondant à un symbole de transmission, et dans lequel au moins deux groupes de bits de code possibles différents correspondent au même point de constellation, et dans lequel les au moins deux groupes de bits de code possibles différents ont au moins deux bits primaires à des positions correspondantes mutuelles dans les groupes de code qui sont identiques entre elles et au moins un bit secondaire à une position correspondante mutuelle qui est différente dans les deux groupes de bits; et
dans lequel le codeur de correction d'erreur directe (202) est opérationnel pour utiliser un code de correction d'erreur adapté pour générer, pour le nombre de bits d'information, un premier groupe de bits de code plus importants et un deuxième groupe de bits de code moins importants, et
comprenant par ailleurs un sélecteur (304) destiné à sélectionner le premier groupe de bits de code plus importants comme les au moins deux bits primaires et le deuxième groupe de bits de code moins importants comme l'au moins un bit secondaire.

2. Emetteur selon la revendication 1, dans lequel le codeur de correction d'erreur direct (202) est opérationnel pour générer le deuxième groupe de bits de code moins importants à partir de bits redondants dans le premier nombre de bits de code.

**17**

**3.** Emetteur selon la revendication 1, dans lequel le sélecteur (304) est opérationnel pour séparer les bits primaires de l'au moins un bit secondaire des bits de code du codeur (202); et

un moyen d'entremêlement primaire (306) opérationnel pour entremêler les bits de code primaires et fournir des bits de code primaires entremêlés;

un moyen d'entremêlement secondaire opérationnel pour entremêler l'au moins un bit de code secondaire et fournir des bits de code secondaires entremêlés; et

un combinateur (310) opérationnel pour combiner les bits de code primaires entremêlés avec l'au moins un bit de code secondaire entremêlé correspondant et fournir le groupe combiné de bits de code entremêlés à l'unité de mappage (212).

**4.** Emetteur selon la revendication 1, dans lequel le sélecteur (304) est opérationnel pour séparer les bits primaires de l'au moins un bit secondaire des bits de code du codeur (202), et

dans lequel l'unité de mappage (212) comprend par ailleurs une unité de mappage primaire (412a) opérationnelle pour effectuer un prémappage des bits primaires selon un schéma de mappage primaire à au moins deux des points de constellation et comprenant par ailleurs une unité de mappage secondaire (412b) opérationnelle pour effectuer un mappage de l'au moins un bit secondaire selon un schéma de mappage secondaire à l'un des au moins deux points de constellation sélectionnés par l'unité de mappage primaire, où le point de constellation sélectionné par l'unité de mappage secondaire correspond au symbole de transmission du signal de transmission.

**5.** Emetteur selon la revendication 4, comprenant par ailleurs un moyen d'entremêlement primaire {306) opérationnel pour entremêler les bits primaires du sélecteur (304) et pour fournir les bits primaires entremêlés à l'unité de mappage primaire (412a), et

un moyen d'entremêlement secondaire (308) opérationnel pour entremêler les bits secondaires du sélecteur et pour fournir les bits secondaires entremêlés à l'unité de mappage secondaire (412b).

**6.** Emetteur selon l'une des revendications 1 à 5, dans lequel un rapport entre le nombre de bits primaires et le nombre de bits secondaires d'un groupe de bits de code est égal ou inférieur au rapport de code.

**7.** Emetteur selon l'une des revendications 1 à 6, dans lequel la pluralité de points de constellation sont des points de constellation basés sur le signal ayant des phases différentes.

**8.** Emetteur selon la revendication 7, dans lequel les points de constellation sont disposés successivement sur un cercle, chaque point de constellation ayant une phase différente.

**9.** Emetteur selon la revendication 8, dans lequel un premier point de constellation (1) correspond au groupe de bits de code 1011 et 0111, un deuxième point de constellation (2) correspondant au groupe de bits de code 1111 et 0011, un troisième point de constellation (3) correspondant au groupe de bits de code 1011 et 0111, un quatrième point de constellation (4) correspondant au groupe de bits de code 1101 et 0001, un cinquième point de constellation (5) correspondant au groupe de bits de code 1001 et 0101, un sixième point de constellation (6) correspondant au groupe de bits de code 0110 et 0000, un septième point de constellation (7) correspondant au groupe de bits de code 1000 et 0100, et un huitième point de constellation (8) correspondant au groupe de bits de code 0010 et 1110.

**10.** Emetteur selon la revendication 8, dans lequel un premier point de constellation correspond au groupe de bits de code 1111 et 0011, un deuxième point de constellation correspondant au groupe de bits de code 1010 et 0110, un troisième point de constellation correspondant au groupe de bits de code 1110 et 0010, un quatrième point de constellation correspondant au groupe de bits de code 1100 et 0000, un cinquième point de constellation correspondant au groupe de bits de code 1000 et 0100, un sixième point de constellation correspondant au groupe de bits de code 10001 et 0101, un septième point de constellation correspondant au groupe de bits de code 1101 et 0001, et un huitième point de constellation correspondant au groupe de bits de code 0111 et 10101.

**11.** Emetteur selon la revendication 8, dans lequel un premier point de constellation correspond au groupe de bits de code 0011 et 1111, un deuxième point de constellation correspondant au groupe du bits de code 1100 et 0000, un troisième point de constellation correspondant au groupe de bits de code 0110 et 1010, un quatrième point de constellation correspondant au groupe de bits de code 1101 et 0001, un cinquième point de constellation correspondant au groupe de bits de code 1000 et 0100, un sixième point de constellation correspondant au groupe de bits de code 1011 et 0111, un septième point de constellation correspondant au groupe de bits de code 0010 et 1110, et un huitième point de constellation correspondant au groupe de bits de code 1001 et 0101.

**12.** Emetteur selon la revendication 8, dans lequel un premier point de constellation correspond au groupe de bits de code 1100 et 0000, un deuxième point de constellation correspondant au groupe de bits de code 1010 et 0110, un troisième point de constellation correspondant au groupe de bits 0001 et 1101 de code, un quatrième point de constellation correspondant au groupe de bits de code 1011 et 0111, un cinquième point de constellation correspondant au groupe de bits de code 1000 et 0100, un sixième point de constellation correspondant au groupe de bits de code 1110 et 0010, un septième point de constellation correspondant au groupe de bits de code 0101 et 1001, et un huitième point de constellation correspondant au groupe de bits de code 1111 et 0011.

**13.** Emetteur selon l'une des revendications 1 à 12, dans lequel le schéma de constellation est l'un des schémas de mappage suivants:

QPSK, PAM, QAM, PSK, M-QAM, M-PSK, M étant un nombre égal ou supérieur à un.

**14.** Emetteur selon l'une des revendications 1 à 13, dans lequel le codeur est opérationnel pour utiliser un code percé compatible avec le débit pour la correction d'erreur directe et dans lequel le sélecteur est opérationnel pour utiliser un modèle de perçage correspondant au code de correction d'erreur direct pour séparer les bits primaires des bits secondaires.

**15.** Emetteur selon l'une des revendications 1 à 14, dans lequel le groupe de bits de code comprend quatre bits, et dans lequel les deux bits à l'extrême gauche sont les bits primaires et les deux bits à l'extrême droite sont les bits secondaires.

**16.** Emetteur selon l'une des revendications 4 ou 5, dans lequel le schéma de mappage primaire est basé sur un schéma de mappage de Gray.

**17.** Emetteur selon l'une des revendications 4 ou 5, dans lequel le schéma de mappage secondaire est basé sur un algorithme de commutation binaire.

**18.** Récepteur pour générer un signal d'information comprenant:

une unité de démappage (572) destinée à défaire le mappage d'un symbole de transmission, pour obtenir un groupe de bits de code, le groupe de bits de code comprenant au moins trois bits de code, dans lequel l'unité de démappage est opérationnelle pour défaire le mappage selon un schéma de constellation présentant une pluralité de points de constellation, chaque point de constellation correspondant à un symbole de transmission, et dans lequel au moins deux groupes de bits de code possibles différents correspondent au même point de constellation, et dans lequel les au moins deux groupes de bits de code possibles différents ont au moins deux bits primaires à des positions correspondantes mutuelles dans les groupes qui sont identiques entre elles et au moins un bit secondaire à une position correspondante mutuelle qui est différente dans les deux groupes de bits;

un sélecteur (304) destiné à sélectionner les au moins deux bits primaires comme premier groupe de bits de code plus importants et l'au moins un bit secondaire comme deuxième groupe de bits de code moins importants; et

un décodeur de correction d'erreur directe destiné à générer un deuxième nombre de bits d'information à partir d'un troisième nombre de bits de code, le troisième nombre de bits de code étant supérieur au deuxième nombre de bits d'information, où une séquence de bits d'information représente le signal d'information; et dans lequel le codeur de correction d'erreur direct (202) est opérationnel pour utiliser un code de correction d'erreur adapté pour générer le nombre de bits d'information à partir du premier groupe de bits de code plus importants et du deuxième groupe de bits de code moins importants.

**19.** Récepteur selon la revendication 18, dans lequel le récepteur est opérationnel pour utiliser un schéma de décodage itératif sur base d'une détection turbo.

**20.** Récepteur selon l'une des revendications 17 ou 18, dans lequel le décodeur de correction d'erreur direct est opérationnel pour utiliser un algorithme BCJR ou un algorithme de Viterbi pour le décodage.

**21.** Procédé pour générer un signal de transmission, le procédé comprenant:

générer un premier nombre de bits de code à partir d'un deuxième nombre de bits d'information, le premier nombre étant supérieur au deuxième nombre, un rapport entre le deuxième nombre et le premier nombre définissant un rapport de code;

effectuer le mappage d'un groupe de bits de code, pour obtenir un symbole de transmission, le groupe de bits de code comprenant au moins trois bits de code, où une séquence de symboles de transmission représente le signal de transmission,

dans lequel une unité de mappage destinée à exécuter l'étape de mappage est opérationnelle pour effectuer le mappage selon un schéma de constellation présentant une pluralité de points de constellation, chaque point de constellation correspondant à un symbole de transmission, et dans lequel au moins deux groupes de bits de code possibles différents correspondent au même point de constellation, et dans lequel les au moins deux groupes de bits de code possibles différents ont au moins deux bits primaires à des positions correspondantes mutuelles dans les groupes qui sont identiques entre elles et au moins un bit secondaire à une position correspondante mutuelle qui est différente dans les deux groupes de bits; et

dans lequel un codeur de correction d'erreur directe (202) destiné à exécuter l'étape de génération est opérationnel pour utiliser un code de correction d'erreur adapté pour générer, pour le nombre de bits d'information, un premier groupe de bits de code plus importants et un deuxième groupe de bits de code moins importants, et sélectionner le premier groupe de bits de code plus importants comme les au moins deux bits primaires et le deuxième groupe de bits de code moins importants comme l'au moins un bit secondaire.

**22.** Procédé pour générer un signal d'information, le procédé comprenant:

défaire le mappage d'un symbole de transmission, pour obtenir un groupe de bits de code, le groupe de bits de code comprenant au moins trois bits de code,

dans lequel une unité de démappage destinée à exécuter l'étape de démappage est opérationnelle pour défaire le mappage selon un schéma de constellation présentant une pluralité de points de constellation, chaque point de constellation correspondant à un symbole de transmission, et dans lequel au moins deux groupes de bits de code possibles différents correspondent au même point de constellation, et dans lequel les au moins deux groupes de bits de code possibles différents ont au moins deux bits primaires à des positions correspondantes mutuelles dans les groupes qui sont identiques entre elles et au moins un bit secondaire à une position correspondante mutuelle qui est différente dans les deux groupes de bits;

sélectionner les au moins deux bits primaires comme premier groupe de bits de code plus importants et l'au moins un bit secondaire comme deuxième groupe de bits de code moins importants;

générer un deuxième nombre de bits d'information à partir d'un premier nombre de bits de code, le premier nombre de bits de code étant supérieur au deuxième nombre de bits d'information, où une séquence de bits d'information représente le signal d'information; et

dans lequel un codeur de correction d'erreur direct (202) destiné à exécuter l'étape de génération est opérationnel pour utiliser un code de correction d'erreur adapté pour générer le nombre de bits d'information à partir du premier groupe de bits de code plus importants et du deuxième groupe de bits de code moins importants.

**23.** Programme d'ordinateur pour réaliser au moins l'un des procédés selon les revendications 21 ou 22, dans lequel le programme d'ordinateur est exécuté sur un ordinateur.

FIG 1

200

202

212

information bits → | Encoder | → code bits → | Mapper | → transmit symbol

11 1111 constellation point2

FIG 2

EP 1 817 886 B1

**FIG 3A**

**FIG 3B**

const.point2
const.point1

0011 , 0110

11 , 10

00 , 01

01 , 11

10 , 00

0110 , 1100

01 , 11

400

information
bits

code
bits

202

Encoder

304

Selector

primary
bits

306

Primary
Interleaver

interleaved
primary
bits

Pre-
Mapper

412a

pre-selected
constellation
points

secondary
bits

Secondary
Interleaver

308

interleaved
secondary
bits

Mapper

412b

transmit
symbol

412

FIG 4A

FIG 4B

EP 1 817 886 B1

FIG 5

1011
0111
1101      1111
0001•     •0011

1001       1010
0101       0110

1100•    •0010
0000     1110
    1000
    0100

## FIG 6A

1110
0010  1010
   •0110
1100
0000•  30°
1000     1111
0100     0011
     •0111
     1011
1001•
0101 1101
  0001

## FIG 6B

0110

1010
•
1101                    1100

0001•              •0000


1000                              0011
0100•                        •1111


.1011•                   •1001
0111              •      0101
                 0010
                 1110
                  .

# FIG 6C


0001
1101          1010
•        •0110

1011
0111•

1000                              1100
0100•                        •0000

                             •1111
                             0011

1110•           •
0010     0101
1001

# FIG 6D

FIG 7

0110
1010 • 0011
0000 1101
1111 1000
0101 0100
1001 • • 1110
1100 • • 0001
0010 • • • 1011
0111

# FIG 8A

○0110○0011○1101○1000

○0000○1010○0100○1110

○1111○1001○0111○0001

○0101○1100○0010○1011

# FIG 8B

0111
1100    •    0001
•
1011
1010 •    • 0010
1001.    .1101
0000    •0100
1111.    .1110
0110
0101    •    .1000
0011

## FIG 9A

0001
•
1000
0100•    •1111
0111    901 ⌐    1100
1101    •    0011
1011    •    0110
0010    ⌐905    1010
1110•    .0101
1001
0000

## FIG 9B

0100
0001
•

0111 •
0010

•1111
1010

1101
1000 •

•1100
• 1001

1110 •
1011

•0011
• 0110

•
0000
0101

# FIG 9C

○ 1 1 0 1 ○ 1 0 1 0

1 0 0 0
○ 0 0 0 1 ○ 1 0 0 0 ○ 0 0 1 1 ○ 0 0 0 0
0 1 1 1
                                        1 1 1 1
○ 1 0 1 1 ○ 1 1 1 0 ○ 1 0 0 1 ○ 0 1 1 0
                                          1 1 0 0

○ 0 0 1 0 ○ 0 1 0 1

## FIG 10A

○ 0 0 1 1 ○ 0 1 1 0 ○ 0 1 0 1 ○ 1 1 0 0
                                             0 0 0 0

○ 0 0 0 0                  ○ 0 0 1 1

○ 1 1 0 1                ○ 1 0 1 0
                                           1 1 1 1

1 1 1 0
○ 0 0 0 1 ○ 0 0 1 0 ○ 0 1 0 0 ○ 1 0 0 1
0 1 1 1

## FIG 10B

1 0 0 0
∘0 0 1 0     ∘1 1 1 0     ∘0 1 0 1
1 0 1 1                     1 0 0 1

∘0 1 1 1                     1 1 0 0
0 1 0 0                    ∘0 0 0 0
                             0 0 1 1

∘0 0 0 1     ∘1 0 1 0     ∘0 1 1 0
1 1 0 1                     1 1 1 1

# FIG 10C

1 1 1 1                     1 1 0 1     1 1 1 0
1 0 0 1     1 0 1 0     0 1 0 0     0 1 1 1
   ∘            ∘            ∘            ∘
0 0 0 0                                 0 0 1 0
0 0 1 1

   ∘            ∘            ∘            ∘
1 1 0 0     0 1 1 0     0 0 0 1     1 0 0 0
0 1 0 1                                 1 0 1 1

# FIG 10D

35

FIG 11

FIG 12

EP 1 817 886 B1

FIG 13

FIG 14
(Prior Art)

FIG 15C
(Prior Art)

FIG 15B
(Prior Art)

FIG 15A
(Prior Art)

FIG 16
(Prior Art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. TEN BRINK ; J. SPEIDEL ; R.-H. YAN.** Iterative demapping for qpsk modulation. *Electronic Letters,* July 1998, 1459-1460
- **A. CHINDAPOL ; A. RITCEY.** Design, analysis and performance evaluation for BICM-ID with square QAM constellations in Rayleigh fading channels. *IEEE Journal on Selected Areas in Communications,* May 2001, vol. 19 (5), 944-957
- **F. SCHRECKENBACH ; N. GOERTZ ; J. HAGENAUER ; G. BAUCH.** Optimized symbol mappings for bit-interleaved coded modulation with iterative decoding. *IEEE Globecom,* December 2003
- **F. SCHRECKENBACH, N ; GOERTZ, J. HAGENAUER ; G. BAUCH.** Optimized symbol mappings for bit-interleaved coded modulation with iterative decoding. *IEEE Communications Letters,* December 2003, vol. 7 (12), 593-595
- **F. SCHRECKENBACH ; G. BAUCH.** EXIT charts for the design of iteratively decoded multilevel modulation. *European Signal Processing Conference (EUSIPCO),* September 2004
- **F. SCHRECKENBACH ; N. GOERTZ ; J. HAGENAUER ; G. BAUCH.** Optimized symbol mappings for bit-interleaved coded modulation with iterative decoding. *IEEE Globecom,* December 2003
- **F. SCHRECKENBACH ; N. GOERTZ ; J. HAGENAUER ; G. BAUCH.** Optimized symbol mappings for bit-interleaved coded modulation with iterative decoding. *IEEE Communications Letters,* December 2003, vol. 7 (12), 593-595
- **T. CLEVORN ; P. VARY.** Iterative decoding of BICM with non-regular signal constellation sets. *International ITG Conference on Source and Channel Coding,* January 2004, 259-266
- **T. CLEVORN ; S. GODTMANN ; P. VARY.** EXIT chart analysis of non-regular signal constellation sets for BICM-ID. *International Symposium on Information Theory and its Applications,* October 2004, 21-26
- **T. CLEVORN ; P. VARY.** Iterative decoding of BICM with non-regular signal constellation sets. *In International ITG Conference on Source and Channel Coding,* January 2004, 259-266
- **T. CLEVORN ; P. VARY.** Iterative decoding of BICM with non-regular signal constellation sets. *International ITG Conference on Source and Channel Coding,* January 2004, 259-266

- **L.R. BAHL ; J. COCKE ; F. JELINEK ; J. RAVIV.** Optimal decoding of linear codes for minimizing symbol error rate. *IEEE Trans-actions on Information Theory,* March 1974, vol. IT-20, 284-287
- **S. TEN BRINK ; J. SPEIDEL ; R.-H. YAN.** Iterative demapping for qpsk modulation. *Electronic Letters,* July 1998, 1.459-1460
- **F. SCHRECKENBACH ; N. GOERTZ ; J. HAGENAUER ; G. BAUCH.** Optimized symbol mappings for bit-interleaved coded modulation with iterative decoding. *IEEE Communications Letters,* December 2003, vol. 7 (12), 593-595
- **F. SCHRECKENBACH ; G. BAUCH.** EXIT charts for the design of iteratively decoded multilevel modulation. *European Signal Processing Conference,* September 2004
- **T. CLEVORN ; P. VARY.** Iterative decoding of BICM with non-regular signal constellation sets. *Inter.national ITG Conference on Source and Channel Coding,* January 2004, 259-266
- **T. CLEVORN ; S. GODTMANN ; P. VARY.** EXIT chart analysis of non-regular signal constellation sets for BICM-ID. *International Symposium on Information Theory and its Applications,* October 2004, 21-26
- **S. TEN BRINK.** Iterative decoding trajectories of parallel concatenated codes. *3rd ITG Conference Source and Channel Coding,* January 2004, 75-80
- **S. TEN BRINK.** Convergence behavior of iteratively decoded parallel concatenated codes. *IEEE Trans-actions on Communications,* October 2001, vol. 49 (10), 1727-1737
- **F. SCHRECKENBACH ; N. GOERTZ ; J. HAGENAUER ; G. BAUCH.** Optimized symbol mappings for bit-interleaved coded modulation' with iterative decoding. *IEEE Communications Letters,* December 2003, vol. 7 (12), 593-595
- **T. CLEVORN ; P. VARY.** Iterative decoding of BICM with non-regular signal constellation sets. In International. *ITG Conference on Source and Channel Coding,* January 2004, 259-266
- **T. CLEVORN ; S. GODTMANN ; P. VARY.** EXIT chart analysis of non-regular signal constellation sets for BICM-ID. *In - ternational Symposium on Information Theory and its Applications,* October 2004, 21-26

- **J. HAGENAUER.** Rate-compatible punctured convolutional codes (RCPC codes) and their applications. *IEEE Transactions on Communications,* April 1988, vol. 36 (4), 389-400